(19) Europäisches Patentamt
European Patent Office
Office européen des brevets

(11) Veröffentlichungsnummer: **0 050 327**
**B1**

(12) # EUROPÄISCHE PATENTSCHRIFT

(45) Veröffentlichungstag der Patentschrift: **20.06.84**

(51) Int. Cl.[3]: **C 07 F 9/09,** C 07 F 9/165, C 07 F 9/10, A 61 K 31/685

(21) Anmeldenummer: **81108393.0**

(22) Anmeldetag: **16.10.81**

(54) **Neue schwefelhaltige Phospholipide, Verfahren zu deren Herstellung und diese Verbindungen enthaltende Arzneimittel.**

(30) Priorität: **21.10.80 DE 3039629**
**13.05.81 DE 3118965**

(43) Veröffentlichungstag der Anmeldung: **28.04.82 Patentblatt 82/17**

(45) Bekanntmachung des Hinweises auf die Patenterteilung: **20.06.84 Patentblatt 84/25**

(84) Benannte Vertragsstaaten: **AT BE CH DE FR GB IT LI LU NL SE**

(56) Entgegenhaltungen:
**EP - A - 0 043 472**
**DE - A - 2 009 341**
**DE - A - 2 619 686**
**DE - A - 2 619 715**

**PATENTS ABSTRACTS OF JAPAN, Band 41, Nr. 178, 10. Dezember 1980**
**BIOCHIMICA et BIOPHYSICA ACTA, 1979, Elsevier/North-Holland Biomedical Press A.J. AARSMAN et al.: "A comparison of acyl-oxyester and acyl-thioester substrates for some lipolytic enzymes", Seiten 519-530**
**BIOORGANIC CHEMISTRY, Band 5, 1976, Academic Press, Inc. (GB) A.J. AARSMAN et al.: "Studies on**

(73) Patentinhaber: **BOEHRINGER MANNHEIM GMBH, Patentabteilung, Abt. E Sandhofer Strasse 112-132 Postfach 31 01 20, D-6800 Mannheim 31 Waldhof (DE)**

(72) Erfinder: **Bosies, Elmar, Dr.rer.nat., Delpstrasse 11, D-6940 Weinheim (DE)**
Erfinder: **Gall, Rudi, Dr.phil., Ulmenstrasse 1, D-6945 Hirschberg 1 (DE)**
Erfinder: **Weimann, Günter, Dr.rer.nat., Panoramastrasse 6, D-6940 Weinheim-Lützelsachsen (DE)**
Erfinder: **Bicker, Uwe, Dr.rer.nat., Hirschstrasse 59, D-6143 Lorsch (DE)**
Erfinder: **Pahlke, Wulf, Dr., Ziegelgasse 33, D-6800 Mannheim 31 (DE)**

(56) Entgegenhaltungen: (Fortsetzung)
**Lysophospholipases. VII. Synthesis of Acylthioester Analogs of Lysolecithin and Their Use in a Continuous Spectrophoto-metric Assay for Lysophospholipases, a Method with Potential Applicability to Other Lipolytic Enzymes", Seiten 241-253**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue schwefelhaltige Phospholipide, deren pharmakologisch unbedenklichen Salze, Verfahren zu deren Herstellung sowie Arzneimittel, die diese Substanzen enthalten.

In der DE-AS Nr. 2009341 wird der 3-Octadecyloxypropanol-(1)-phosphorsäuremonocholinester als immunologisches Adjuvans, in der DE-AS Nr. 2009342 dessen 2-Hydroxyderivat als Mittel zur Steigerung der natürlichen Resistenz des Organismus und in der DE-OS Nr. 2619686 dessen 2-Methoxyderivat als Antitumormittel beansprucht. Schliesslich ist in der DE-OS Nr. 2619715 das Dodecyloxypropylphosphorylcholin als Tumorantigen beschrieben.

Es wurde nun gefunden, dass Alkanolphosphorsäuremonoammoniumalkylester, die durch eine alkylierte Mercapto-, Sulfinyl- oder Sulfonylgruppe substituiert sind, ebenfalls cancerostatisch wirken, aber im Gegensatz zu den obengenannten Phopholipiden keine Thrombozytenaggregation auslösen.

Gegenstand der vorliegenden Erfindung sind demnach Verbindungen der allgemeinen Formel I

$$R_1-X-R_2-S(O)_n-R_3-Y-\overset{\overset{\displaystyle O}{\|}}{\underset{\underset{\displaystyle O^{\ominus}}{|}}{P}}-O-R_4-\overset{\oplus}{N}(R_5)_3 \quad (I)$$

in der

X einen Valenzstrich, Sauerstoff, Schwefel, die Sulfinyl- oder Sulfonylgruppe, die $-NHCO-$, $-CONH-$ oder $-NHCONH-$-Gruppe, einen $C_3$ bis $C_8$-Cycloalkylen- oder Phenylenrest,

Y Sauerstoff oder Schwefel,

$R_1$ Wasserstoff, einen geradkettigen oder verzweigten, gesättigten oder ungesättigten Alkylrest mit 1 bis 18 Kohlenstoffatomen, der gegebenenfalls ein- oder mehrfach durch Aryl, Halogen, eine niedere Alkoxy-, Alkylmercapto-, Alkoxycarbonyl-, Alkansulfinyl- oder Alkansulfonylgruppe substituiert ist,

$R_2$ eine geradkettige oder verzweigte, gesättigte oder ungesättigte Alkylenkette mit 1 bis 18 Kohlenstoffatomen, die gegebenenfalls ein- oder mehrfach durch Halogen, Aryl, eine niedere Alkoxy-, Alkoxycarbonyl-, Alkylmercapto-, Alkansulfinyl- oder Alkansulfonylgruppe substituiert ist,

$R_3$ eine geradkettige oder verzweigte, gesättigte oder ungesättigte Alkylenkette mit 2 bis 8 Kohlenstoffatomen, die auch Teil eines gegebenenfalls durch eine niedere Alkylgruppe substituerten Cyclopentan-, Cyclohexan- oder Cycloheptanringes sein kann und

die gegebenenfalls ein- oder mehrfach durch Hydroxy, Halogen, Nitril, eine Cycloalkyl-, Phenyl-, Alkoxycarbonyl-, gegebenenfalls alkylierte Carbamoyl-, Alkylmercapto-, Alkansulfinyl-, Alkansulfonyl-, gegebenenfalls acylierte Aminogruppe oder durch Alkoxy substituiert ist, das wiederum durch Aryl, Alkylmercapto, Alkansulfinyl, Alkansulfonyl, gegebenenfalls acyliertes $NH_2$, Alkoxycarbonyl, Nitril, Hydroxyl, Alkoxy oder gegebenenfalls alkyliertes Carbamoyl substituiert sein kann,

$R_4$ eine geradkettige oder verzweigte Alkylenkette mit 2 bis 4 Kohlenstoffatomen,

$R_5$ Wasserstoff oder eine niedere Alkylgruppe, und

n die Zahlen 0, 1 oder 2

bedeuten,

mit der Massgabe, dass die Gruppe $R_1-X-R_2$ für den Fall, dass sie eine Alkylgruppe darstellt (X = Valenz), bis zu 20 C-Atome aufweist sowie deren pharmakologisch unbedenklichen Salze.

Alkyl bedeutet in dem Substituenten $R_5$ einen Kohlenwasserstoffrest mit 1 bis 6 Kohlenstoffatomen, insbesondere den Methyl- oder Ethylrest.

Alkoxy, Alkoxycarbonyl, Alkylmercapto, Alkansulfinyl und Alkansulfonyl bedeuten in der Regel Reste mit 1 bis 6 Kohlenstoffatomen, können aber auch Reste mit bis zu 20 Kohlenstoffatomen sein, z.B. Octadecylmercapto, Tetradecyloxy, Octylmercapto.

Unter Cycloalkylenrest der Gruppe X sind Reste mit 3 bis 8 Kohlenstoffatomen zu verstehen, insbesondere der Cyclopropylen-, Cyclopentylen- und Cyclohexylenrest.

Cycloalkanringe, die auch Bestandteil der Alkylenkette der Gruppe $R_3$ sein können, sind der Cyclopentan-, Cyclohexan- und der Cycloheptanring, wobei die Ringe noch durch eine niedere Alkylgruppe substituiert sein können.

Halogen bedeutet Fluor, Chlor, Brom und Jod, vorzugsweise jedoch Fluor.

Die Gruppe $R_1-X-R_2$ bedeutet für den Fall, dass X einen Valenzstrich darstellt, eine Alkylgruppe mit bis zu 20 Kohlenstoffatomen, die geradkettig oder verzweigt, gesättigt oder ungesättigt sein kann. Als geradkettige Gruppe kommt vorzugsweise der Eicosyl-, Octadecyl-, Heptadecyl-, Hexadecyl-, Tetradecyl-, Dodecyl- und der Octylrest in Frage. Die ungesättigte Gruppe kann bis zu 4 Doppelbindungen enthalten, vorzugsweise jedoch 1 oder 2 Doppelbindungen.

Die Gruppe $R_3$ besteht bevorzugt aus einer $-CH_2-CH_2-CH_2-$-Gruppe, deren mittlere $CH_2$-Gruppe ein- oder zweifach durch Alkyl-, Alkoxy-, Alkylmercapto-, Alkansulfinyl-, Alkansulfonyl-, Alkoxyalkylen-, Benzyloxy-, Hydroxy- oder Halogen substituert sein kann und die gegebenenfalls an $C_1$ und $C_3$ durch Alkylgruppen substituiert sein kann, wobei diese auch einen Ring bilden können.

Die Gruppe $R_4$ bedeutet bevorzugt die $-CH_2-CH_2-$-Gruppe.

Bevorzugte Verbindungen der Formel I sind insbesondere Derivate des Propanol-(1)- bzw. Propanthiol-(1)-phosphorsäuremonocholinesters, die in 3-Stellung des Propanols durch einen Alkylmercapto-, Alkansulfinyl- oder Alkansulfonylrest und gegebenenfalls auch in 2-Stellung substituert ist.

Weiter sind Gegenstand der Erfindung Verfahren zur Herstellung der Verbindungen der allgemeinen Formel I

$$R_1-X-R_2-S(O)_n-R_3-Y-\overset{\overset{\displaystyle O}{\|}}{\underset{\underset{\displaystyle O^{\ominus}}{|}}{P}}-O-R_4-\overset{\oplus}{N}(R_5)_3 \quad (I)$$

in der
$R_1$ bis $R_5$, X, Y und n die oben angegebene Bedeutung haben,
wobei man eine Verbindung der allgemeinen Formel II

$$R_1-X-R_2-S(O)_n-R_3-YH \qquad (II)$$

in der
$R_1$, $R_2$, $R_3$, X, Y und n die oben angegebene Bedeutung haben,
entweder
a) mit einer Verbindung der allgemeinen Formel III oder IIIa

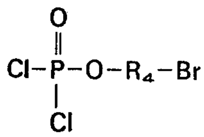 (III), 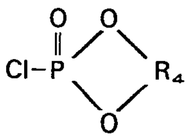 (IIIa),

in denen
$R_4$ die oben genannte Bedeutung hat, in Gegenwart eines säurebindenden Mittels umsetzt, das Reaktionsprodukt bei Verwendung einer Verbindung der Formel III selektiv hydrolysiert und das verbleibene Bromatom gegen eine gegebenenfalls alkylierte Ammoniumgruppe austauscht, bei Verwendung einer Verbindung der Formel IIIa direkt mit gegebenenfalls alkyliertem Ammoniak behandelt
oder
b) in eine Verbindung der allgemeinen Formel IV überführt

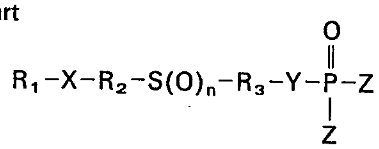 (IV)

in der
$R_1$, $R_2$, $R_3$, Y, X und n die oben angegebenen Bedeutungen haben und Z Hydroxy, Chlor oder Brom bedeutet, und diese mit einer Verbindung der allgemeinen Formel V

$$HO-R_4-\overset{\oplus}{N}(R_5)_3\ Hal^{\ominus} \qquad (V)$$

in der
$R_4$ und $R_5$ die oben angegebenen Bedeutungen haben und $Hal^{\ominus}$ Chlorid, Bromid oder Jodid sein soll, in Gegenwart eines säurebindenden Mittels oder eines Aktivierungsreagenzes umsetzt,
oder
c) mit einer Verbindung der allgemeinen Formel VI

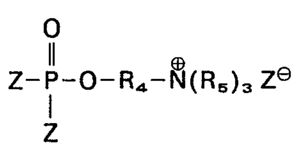 (VI)

in der
$R_4$, $R_5$ und Z die oben angegebenen Bedeutungen haben und $Z^{\ominus}$ Chlorid oder Bromid sein soll, in Gegenwart eines säurebindenden Mittels umsetzt, in das innere Salz überführt und gegebenenfalls oxidiert.

Alle beschriebenen Verfahren erfolgen in an sich bekannter Weise.

Das Verfahren a wird in der Regel so durchgeführt, dass ein Alkanol bzw. Alkanthiol der allgemeinen Formel II mit einem Bromalkanolphosphorsäuremonoesterdichlorid der allgemeinen Formel III in Gegenwart eines säurebindenden Mittels, wie z.B. Triethylamin in einem absoluten, inerten organischen Lösungsmittel, wie z.B. chlorierter Kohlenwasserstoff oder Toluol, bei Temperaturen um den Gefrierpunkt bis Raumtemperatur reagiert. Die selektive Hydrolyse des erhaltenen Phosphorsäurediestermonochlorids wird direkt in zweiphasiger Mischung durch Zugabe einer wässerigen Kaliumchloridlösung bei 0 bis 50°C erreicht. Zur Substitution des verbliebenen Bromatoms durch eine gegebenenfalls alkylierte Ammoniumgruppe löst man den Ammoniak oder das Alkylamin in einem Medium, das sowohl den Phosphorsäurediester als auch Ammoniak oder das Amin genügend gut löst, wozu sich besonders Mischungen aus Acetonitril oder niederen Alkoholen mit chlorierten Kohlenwasserstoffen eignen und vervollständigt die Reaktion bei einer Temperatur von 20 bis 70°C.

Bei der Verwendung einer Verbindung der Formel IIIa wird das Reaktionsprodukt direkt mit gegebenenfalls alkyliertem Ammoniak behandelt.

Man kann auch stufenweise vorgehen, also zuerst eine Alkylammoniumgruppe einführen und mit Alkylhalogenid anschliessend zum Di- oder Trialkylammoniumalkylester umsetzen.

Die Entfernung der restlichen Halogenidionen erfolgt vorzugsweise in niederen Alkoholen mittels Silberacetat oder Silberoxid. Sämtliche Zwischenstufen sowie Endprodukte lassen sich bequem säulenchromatographisch mit üblichen Elutionsmitteln, wie z.B. Ether, Ligroin, chlorierten Kohlenwasserstoffen, niederen Alkoholen oder Mischungen derselben, an Kieselgel reinigen, wobei im Falle des betainartigen Endprodukts zweckmässig etwas Wasser zugesetzt wird.

Bei Verfahren b wird, falls Z Chlor oder Brom bedeutet, die Umsetzung einer Verbindung der Formel II zum Phosphoresterdihalogenid der Formel IV mit Phosphoroxyhalogenid in inerten, wasserfreien Lösungsmitteln wie z.B. halogenierten Kohlenwasserstoffen in Gegenwart von Säureakzeptoren, vorzugsweise Pyridin oder Chinolin, vorgenommen. Die Reaktionstemperaturen liegen zwischen 0 und 40°C. Das Produkt kann isoliert werden oder ohne Isolierung mit Alkylammoniumalkanolhalogeniden oder Ammoniumalkanolhalogeniden unter Zusatz von weiterem Pyridin oder Chinolin bei Temperaturen von 0 bis 40°C zum gewünschten Endprodukt umgesetzt werden. Als Lösungsmittel hierfür verwendet man bevorzugt halogenierte Kohlenwasserstoffe sowie Acetonitril oder Trichloracetonitril. Für den Fall, dass Z Hydroxy bedeutet, kann die Verbindung der allgemeinen Formel IV durch Hydrolyse des entsprechenden Phosphoresterdihalogenids oder durch Hydrogenolyse des entsprechenden Phosphoresterdiphenylesters hergestellt werden. Die weitere Umsetzung mit Substanzen der allgemeinen Formel V geschieht in Gegenwart von Sulfonsäurehalogeniden, wie p-Toluolsulfochlorid oder

Triisopropylbenzolsulfochlorid. Als Lösungsmittel verwendet man Dimethylformamid mit einem Zusatz an Pyridin oder Pyridin allein. Die Reaktionstemperaturen liegen in der Regel bei 0 bis 40°C. Die Substanzen der allgemeinen Formel VI bei Verfahren c können für den Fall, dass Z Hydroxy bedeutet, mit allgemein üblichen Halogenierungsmitteln, wie z.B. Phosphorpentachlorid, in Gegenwart eines Säureakzeptors, wie z.B. Pyridin, zu Substanzen der allgemeinen Formel VI mit Z = Chlor oder Brom umgesetzt werden, die dann isoliert werden können oder ohne Isolierung mit Verbindungen der allgemeinen Formel II zur Reaktion gebracht werden. Als Säureakzeptoren werden hier in der Regel ebenfalls stickstoffhaltige Basen wie Pyridin, Chinolin oder Triethylamin eingesetzt. Die bevorzugten Lösungsmittel sind wasserfreie halogenierte Kohlenwasserstoffe oder auch Toluol.

Die als Ausgangsmaterial eingesetzten alkylierten Mercaptoalkanole der allgemeinen Formel II sind ebenfalls neu und lassen sich leicht durch Umsetzung von Halogenalkanen mit Mercaptocarbonsäuren oder Estern, oder von Mercaptoalkanen mit Halogencarbonsäuren oder Estern in Gegenwart eines säurebindenden Mittels, wie z.B. Natriumalkoholat in einem niederen Alkohol, oder durch Addition von Mercaptoalkanen an α,β-ungesättigte Carbonsäuren oder Ester in einem niederen Alkohol unter Basenkatalyse und anschliessende Behandlung mit Reduktionsmitteln, wie z.B. Natriumborhydrid in niederen Alkoholen, oder Lithiumaluminiumhydrid in abs. Ether erhalten. Eine weitere Herstellungsart der Verbindungen der allgemeinen Formel II besteht in der Umsetzung von Mercaptoalkanen mit Alkanolen, die eine reaktive Gruppe wie z.B. Halogen oder den Sulfonsäurerest tragen, oder von Halogenalkanen mit Mercaptoalkoholen in Gegenwart eines säurebindenden Mittels, wie z.B. Kaliumhydroxid oder Natriumalkoholat in einem niederen Alkohol oder durch Addition eines Mercaptoalkans an einen ungesättigten Alkohol unter Basen- oder Peroxidkatalyse.

Die Thiole der allgemeinen Formel II lassen sich aus den Alkoholen der allgemeinen Formel II nach an sich bekannten Methoden synthetisieren, indem man z.B. aus dem Alkohol der allgemeinen Formel II ein Halogenid oder Sulfonat herstellt, dieses mit Thioharnstoff reagieren lässt und das entstandene Isothiuroniumsalz mit Alkali spaltet. Durch Ansäuern erhält man dann das gewünschte Thiol der allgemeinen Formel II.

Gegenstand der Erfindung sind ferner sämtliche stereoisomeren Verbindungen der Formel I, die z.B. aufgrund asymmetrischer Kohlenstoffatome, der Sulfoxidgruppe oder aufgrund von cis-trans-Isomerie anfallen. Eine Trennung der in einem Gemisch anfallenden Produkte geschieht nach an sich bekannten Verfahren.

Die pharmakologisch verträglichen Salze erhält man in üblicher Weise, z.B. durch Neutralisation der Verbindungen der Formel I mit nichttoxischen anorganischen oder organischen Säuren wie z.B. Salz-, Schwefel-, Phosphor-, Bromwasserstoff-, Essig-, Milch-, Zitronen-, Äpfel-, Salicyl-, Malon-, Malein- oder Bernsteinsäure.

Die erfindungsgemässen neuen Substanzen der Formel I und ihre Salze können in flüssiger oder fester Form enteral und parenteral appliziert werden. Hierbei kommen alle üblichen Applikationsformen in Frage, beispielsweise Tabletten, Kapseln, Dragées, Sirupe, Lösungen, Suspensionen. Als Injektionsmedium kommt vorzugsweise Wasser zur Anwendung, welches die bei Injektionslösungen üblichen Zusätze wie Stabilisierungsmittel, Lösungsvermittler und Puffer enthält. Derartige Zusätze sind z.B. Tartrat- und Citratpuffer, Ethanol, Komplexbildner (wie Ethylendiamintetraessigsäure und deren nichttoxische Salze), hochmolekulare Polymere (wie flüssiges Polyethylenoxid) zur Viskositätsregelung. Flüssige Trägerstoffe für Injektionslösungen müssen steril sein und werden vorzugsweise in Ampullen abgefüllt. Feste Trägerstoffe sind z.B. Stärke, Lactose, Mannit, Methylcellulose, Talkum, hochdisperse Kieselsäuren, höhermolekulare Fettsäuren (wie Stearinsäure), Gelatine, Agar-Agar, Calciumphosphat, Magnesiumstereat, tierische und pflanzliche Fette, feste hochmolekulare Polymere (wie Polyethylenglykole); für orale Applikation geeignete Zubereitungen können gewünschtenfalls Geschmack- und Süssstoffe enthalten.

Die Dosierung kann von verschiedenen Faktoren, wie Applikationsweise, Spezies, Alter und/oder individuellen Zustand abhängen. Die täglich zu verabreichenden Dosen liegen bei etwa 0,05-1,00 mg/kg Körpergewicht.

Bevorzugt im Sinne der vorliegenden Erfindung sind ausser den in den Beispielen genannten Verbindungen die folgenden Ester:

1. 2,3-Bisoctadecylmercaptopropanol-(1)-phosphorsäuremonocholinester
2. 2-[3-(Hexadecylmercapto)propoxyphosphoryloxyhydroxy]-2-methylethylammoniumhydroxid
3. 3-Tetradecylmercapto-2-ethoxypropanol-(1)-phosphorsäuremonocholinester
4. 3-Hexadecylmercapto-2-ethoxypropanol-(1)-phosphorsäuremonocholinester, Fp. 69°C, Sintern, 238-243°C, Zers.
5. 3-(14-Methylmercaptotetradecylmercapto)-propanol-(1)-phosphorsäuremonocholinester
6. 3-(17-Methyloctadecylmercapto)propanol-(1)-phosphorsäuremonocholinester
7. 3-(8-Fluoroctadecylmercapto)propanol-(1)-phosphorsäuremonocholinester
8. 2-Hydroxy-3-octadecylmercaptopropanol-(1)-phosphorsäuremonocholinester
9. 2-Hydroxy-3-octadecansulfinylpropanol-(1)-phosphorsäuremonocholinester
10. 2-Hydroxy-3-octadecansulfonylpropanol-(1)-phosphorsäuremonocholinester
11. 2-Methoxy-3-[8-(4-octylcyclohexyl)octylmercapto]propanol-(1)-phosphorsäuremonocholinester
12. 3-Hexadecylmercapto-2-methylmercaptopropanol-(1)-phosphorsäuremonocholinester

13. 3-Hexadecylmercapto-2-methansulfinylpropanol-(1)-phosphorsäuremonocholinester
14. 3-Hexadecylmercapto-2-methansulfonylpropanol-(1)-phosphorsäuremonocholinester
15. 2-Methoxy-3-(2-methoxyoctadecylmercapto)propanol-(1)-phosphorsäuremonocholinester
16. 2-Methoxy-3-(2-tetradecyloxyoctadecylmercapto)propanol-(1)-phosphorsäuremonocholinester
17. 2-Methoxy-3-(14-tetradecyloxyoctadecylmercapto)propanol-(1)-phosphorsäuremonocholinester
18. 2-Methoxy-3-(14-methylmercaptotetradecylmercapto)propanol-(1)-phosphorsäuremonocholinester
19. 2-Methoxy-3-(17-methyloctadecylmercapto)propanol-(1)-phosphorsäuremonocholinester
20. 3-(8-Fluoroctadecylmercapto)-2-methoxypropanol-(1)-phosphorsäuremonocholinester
21. 2-Fluor-3-octadecylmercaptopropanol-(1)-phosphorsäuremonocholinester
22. 2-Fluor-3-octadecansulfinylpropanol-(1)-phosphorsäuremonocholinester
23. 2-Fluor-3-octadecansulfonylpropanol-(1)-phosphorsäuremonocholinester
24. 2-Ethylmercapto-3-octadecylmercaptopropanol-(1)-phosphorsäuremonocholinester
25. 3-Hexadecansulfinyl-2-methylpropanol-(1)-phosphorsäuremonocholinester
26. 3-Heptadecylmercapto-2-methylpropanol-(1)-phosphorsäuremonocholinester, Fp. 74°C, Sintern, 250-254°C, Zers.
27. Cis-3-hexadecylmercaptocyclohexanol-(1)-phosphorsäuremonocholinester, Fp. 65°C, Sintern, 240-252°C, Zers.
28. 2,3-Bisoctylmercaptopropanol-(1)-phosphorsäuremonocholinester
29. 2-Methoxy-3-[8-(4-octylphenyl)octylmercapto]propanol-(1)-phosphorsäuremonocholinester
30. 2,2-Dimethyl-3-hexadecansulfinylpropanol-(1)-phosphorsäuremonocholinester
31. 2,2-Dimethyl-3-hexadecansulfonylpropanol-(1)-phosphorsäuremonocholinester
32. 2-Methoxymethylen-3-octadecylmercaptopropanol-(1)-phosphorsäuremonocholinester
33. 2,2-Diethoxy-3-hexadecylmercaptopropanol-(1)-phosphorsäuremonocholinester
34. 4-Octadecylmercapto-n-butanol-(2)-phosphorsäuremonocholinester
35. 4-Octadecansulfinyl-n-butanol-(1)-phosphorsäuremonocholinester
36. 4-Octadecansulfonyl-n-butanol-(1)-phosphorsäuremonocholinester
37. 3-Hexadecansulfinylcyclopentanol-(1)-phosphorsäuremonocholinester
38. 3-Hexadecansulfonylcyclopentanol-(1)-phosphorsäuremonocholinester
39. 4-Octadecylmercapto-n-butanol-(1)-phosphorsäuremonocholinester
40. 3-Octadecansulfinylcyclohexanol-(1)-phosphorsäuremonocholinester
41. 3-Octadecansulfonylcyclohexanol-(1)-phosphorsäuremonocholinester
42. 2-Ethyl-3-octadecylmercaptocyclohexanol-(1)-phosphorsäuremonocholinester
43. 2,2-(6-Methylcyclohex-3-enyliden)-3-hexadecylmercaptopropanol-(1)-phosphorsäuremonocholinester
44. 2-Octadecylmercaptoethanolphosphorsäuremonocholinester
45. 2-(2-Propinyl)-3-hexadecylmercaptopropanol-(1)-phosphorsäuremonocholinester, Fp. 54°C, Sintern, 237-239°C, Zers.
46. 2-Propadienyl-3-hexadecylmercaptopropanol-(1)-phosphorsäuremonocholinester
47. 2-(1-Propenyl)-3-hexadecylmercaptopropanol-(1)-phosphorsäuremonocholinester
48. Trans-3-hexadecylmercaptocyclohexanol-(1)-phosphorsäuremonocholinester, Fp. 59°C, Sintern, 245-250°C, Zers.
49. 2-Isopropyl-3-hexadecylmercaptopropanol-(1)-phosphorsäuremonocholinester, Fp. 68°C, Sintern, 242°C, Zers.
50. 2-Methyl-3-heptadecylmercaptopropanol-(1)-phosphorsäuremonocholinester
51. 2-Methyl-3-hexadecansulfonylpropanol-(1)-phosphorsäuremonocholinester, Fp. 64°C, Sintern, 232°C, Aufschäumen
52. 2-Methyl-2-methoxy-3-hexadecylmercaptopropanol-(1)-phosphorsäuremonocholinester
53. 2,2-Bismethoxymethylhexadecylmercaptopropanol-(1)-phosphorsäuremonocholinester
54. 2-Methylmercaptomethyl-3-hexadecylmercaptopropanol-(1)-phosphorsäuremonocholinester, Wachs, 240°C, Zers.
55. 2-Methansulfinylmethyl-3-hexadecylmercaptopropanol-(1)-phosphorsäuremonocholinester
56. 2-Methansulfonylmethyl-3-hexadecylmercaptopropanol-(1)-phosphorsäuremonocholinester
57. 2-Methoxyethoxymethyl-3-hexadecylmercaptopropanol-(1)-phosphorsäuremonocholinester
58. 2-Cyanomethyl-3-hexadecylmercaptopropanol-(1)-phosphorsäuremonocholinester
59. 2-Carbamoylmethyl-3-hexadecylmercaptopropanol-(1)-phosphorsäuremonocholinester
60. 2-N,N-Dimethylcarbamoylmethyl-3-hexadecylmercaptopropanol-(1)-phosphorsäuremonocholinester
61. 2-Ethoxycarbonylmethyl-3-hexadecylmercaptopropanol-(1)-phosphorsäuremonocholinester

62. 2-Methyl-3-(1-methoxycarbonylheptadecylmercapto)propanol-(1)-phosphorsäuremonocholinester, Fp. 84°C, Sintern, 239-241°C, Aufschäumen
63. Thiophosphorsäure-O-cholinester-S-3-heptadecylmercaptopropylester, Fp. 80°C, Sintern, 264°C, Zers.
64. Thiophosphorsäure-O-cholinester-S-2-methyl-3-hexadecansulfinylpropylester
65. Thiophosphorsäure-O-cholinester-S-2-methyl-3-hexadecansulfonylpropylester, Fp. 60°C, Sintern, 205-208°C, leichte Schaumbildung
66. Thiophosphorsäure-O-cholinester-S-2-benzyl-3-octadecylmercaptopropylester, Fp. 240°C, Zers.
67. Thiophosphorsäure-O-cholinester-S-2,2-dimethyl-3-hexadecylmercaptopropylester
68. 2-Aminoethyl-3-hexadecylmercaptopropanol-(1)-phosphorsäuremonocholinester
69. 2-Acetylaminoethyl-3-hexadecylmercaptopropanol-(1)-phosphorsäuremonocholinester
70. 2-Mesylaminoethyl-3-hexadecylmercaptopropanol-(1)-phosphorsäuremonocholinester
71. 2-Hydroxymethyl-3-heptadecylmercaptopropanol-(1)-phosphorsäuremonocholinester
72. 2-Cyclopentyl-3-heptadecylmercaptopropanol-(1)-phosphorsäuremonocholinester
73. 2-Cyclohexylmethyl-3-hexadecylmercaptopropanol-(1)-phosphorsäuremonocholinester
74. 2-p-Methylbenzyl-3-octadecylmercaptopropanol-(1)-phosphorsäuremonocholinester
75. 2-Cyano-3-heptadecylmercaptopropanol-(1)-phosphorsäuremonocholinester
76. 2-Carbamoyl-3-heptadecylmercaptopropanol-(1)-phosphorsäuremonocholinester
77. 2-Hydroxy-3-hexadecylmercaptopropanol-(1)-phosphorsäuremonocholinester
78. 2-Isopropoxy-3-heptadecylmercaptopropanol-(1)-phosphorsäuremonocholinester
79. 2-(3-Phenethyloxy)-3-heptadecylmercaptopropanol-(1)-phosphorsäuremonocholinester
80. 2-(2-Hydroxyethoxy)-3-octadecylmercaptopropanol-(1)-phosphorsäuremonocholinester
81. 2-(2-Methylmercaptoethoxy)-3-octadecylmercaptopropanol-(1)-phosphorsäuremonocholinester
82. 2-(2-Methansulfinylethoxy)-3-octadecylmercaptopropanol-(1)-phosphorsäuremonocholinester
83. 2-(2-Methansulfonylethoxy)-3-octadecylmercaptopropanol-(1)-phosphorsäuremonocholinester
84. 2-(2-Aminoethoxy)-3-heptadecylmercaptopropanol-(1)-phosphorsäuremonocholinester
85. 2-(2-Acetylaminoethoxy)-3-heptadecylmercaptopropanol-(1)-phosphorsäuremonocholinester
86. 2-(2-Mesylaminoethoxy)-3-heptadecylmercaptopropanol-(1)-phosphorsäuremonocholinester
87. 2-Ethoxycarbonylmethoxy-3-hexadecylmercaptopropanol-(1)-phosphorsäuremonocholinester
88. 2-Cyanomethoxy-3-hexadecylmercaptopropanol-(1)-phosphorsäuremonocholinester
89. 2-Carbamoylmethoxy-3-hexadecylmercaptopropanol-(1)-phosphorsäuremonocholinester
90. 2-Amino-3-hexadecylmercaptopropanol-(1)-phosphorsäuremonocholinester
91. 2-Acetylamino-3-hexadecylmercaptopropanol-(1)-phosphorsäuremonocholinester
92. 2-Methyl-3-(11-butylureylenundecylmercapto)propanol-(1)-phosphorsäuremonocholinester
93. 2-Methyl-3-(11-valeroylaminoundecylmercapto)propanolphosphorsäuremonocholinester
94. 2-N-Dodecylcarboxamidomethoxy-3-hexadecylmercaptopropanol-(1)-phosphorsäuremonocholinester
95. 2-Ethyliden-3-hexadecylmercaptopropanol-(1)-phosphorsäuremonocholinester

Die nachfolgenden Beispiele zeigen einige der Verfahrensvarianten, die zur Synthese der erfindungsgemässen Verbindungen verwendet werden können.

*Beispiel 1:*

*3-Octadecylmercaptopropanol-(1)-phosphorsäuremonocholinester*

6,7 g 3-Octadecylmercaptopropanol, Fp. 53-55°C, werden in 70 ml abs. Methylenchlorid gelöst und zu einer zweiten Lösung bei −5°C getropft, die in 70 ml abs. Methylenchlorid, 6,7 g Phosphorsäuremono-2-bromethylesterdichlorid und 9,7 ml Triethylamin enthält. Nach 1 h lässt man auf Raumtemperatur kommen und lässt über Nacht stehen. Dann gibt man 80 ml 0,1 N-Kaliumchloridlösung zu und rührt 2 h bei 40°C. Jetzt kühlt man ab, gibt 130 ml Methanol zu und stellt mit konz. Salzsäure auf pH 3 ein. Man trennt die organische Phase ab, wäscht mit Wasser, trocknet und engt ein. Der Eindampfrückstand (8,7 g), der den 3-Octadecylmercaptopropanol-(12)-phosphorsäuremono-(2-bromethyl)ester darstellt, wird im Rohzustand weiter umgesetzt. Man löst ihn in einer Mischung aus je 45 ml Methanol und Chloroform und leitet Trimethylamin ein. Dann rührt man 1 h unter Rückfluss, lässt über Nacht bei Raumtemperatur stehen, engt ein, löst in Chloroform, filtriert und versetzt das klare Filtrat mit Aceton, wodurch 6,1 g dünnschichtchromatographisch einheitliches Bromid anfallen. Zur Entfernung der Bromidionen behandelt man in methanolischer

Lösung mit Silberacetat und reinigt schliesslich an einer Kieselgelsäule durch Elution mit einer Mischung aus Chloroform/Methanol/Wasser (65:25:4). Man erhält so 2,3 g = 26% vom Fp. 238-240°C Zers.

Das Produkt enthält nach dem Ergebnis der Elementaranalyse 1,5 mol Wasser.

Die Struktur ist durch NMR-Spektrum und Elementaranalyse, die der Vorstufen auch durch massenspektroskopische Untersuchung hier und in allen anderen Beispielen gesichert.

Das als Ausgangsmaterial verwendete 3-Octadecylmercaptopropanol wird wie folgt hergestellt:

0,35 g Natrium werden in 10 ml Methanol gelöst, 1,8 g 3-Mercaptopropionsäuremethylester zugetropft und dann eine Lösung von 5,2 g Octadecylbromid in 20 ml Methanol zugegeben. Nach 3 h Rückfluss wird abgekühlt und die erhaltene Suspension abgesaugt. Zur Reinigung wird an einer Kieselgelsäule chromatographiert. Elutionsmittel: Chloroform/Ligroin 1:1. Es werden 4,1 g 3-Octadecylmercaptopropionsäuremethylester vom Fp. 39-41°C erhalten. Man löst in Ether und reduziert mit Lithiumaluminiumhydrid, bis im Dünnschichtchromatogramm der Ester nicht mehr zu sehen ist. Nach üblicher Aufarbeitung erhält man so 2,8 g 3-Octadecylmercaptopropanol, Fp. 53-55°C.

Statt Octadecylbromid kann auch Octadecylmercaptan eingesetzt werden, das dann mit 3-Brompropionsäuremethylester umgesetzt oder an Acrylsäuremethylester unter Natriummethylatkatalyse addiert wird. In beiden Fällen wird 3-Octadecylmercaptopropionsäuremethylester erhalten.

Schliesslich kann 3-Octadecylmercaptopropanol auch durch Addition von Octadecylmercaptan an Allylalkohol erhalten werden.

*Beispiel 2:*

*3-Octadecansulfinylpropanol-(1)-phosphorsäuremonocholinester*

0,25 g der in Beispiel 1 beschriebenen Vorstufe, 3-Octadecylmercaptopropanol, werden in 5 ml Eisessig mit 0,07 ml Perhydrol versetzt, nach 1stündigem Rühren bei Raumtemperatur mit verdünnter Natronlauge schwach alkalisch gestellt und die Suspension nach 2 h abgesaugt, mit Wasser gewaschen und getrocknet. Man erhält so 0,34 g vom Fp. 74-78°C und reinigt noch an der Kieselgelsäule mit Chloroform/Methanol 99:1, was einen Fusionspunktanstieg auf 81-83°C bewirkt. Mit diesem 3-(Octadecansulfinyl)propanol wird die Synthese, wie in Beispiel 1 beschrieben, durchgeführt. Man erhält so 19% dünnschichtchromatographisch einheitliche Kristalle vom Fp. 244°C Zers. Sie enthalten 1 mol Wasser.

Ein identisches Produkt erhält man auch durch selektive Oxidation der nach Beispiel 1 erhaltenen Verbindung mit Perhydrol in Eisessig.

*Beispiel 3:*

*3-Octadecansulfonylpropanol-(1)-phosphorsäuremonocholinester*

0,25 g der in Beispiel 1 beschriebenen Verbindung werden in 5 ml Eisessig und 0,1 ml Perhydrol 8 h bei Raumtemperatur gerührt. Dann engt man nach Wasserzugabe ein und rührt den Rückstand mit Aceton aus. Man erhält so 0,23 g = 87% Kristalle vom Fp. 240-242°C Zers. Sie enthalten 2 mol Wasser.

Ein identisches Produkt erhält man auch auf folgendem Weg:

0,5 g der in Beispiel 1 beschriebenen Vorstufe, 3-Octadecylmercaptopropanol, werden in 10 ml Eisessig gelöst und mit 0,13 ml Perhydrol versetzt. Nach 1stündigem Rühren bei Raumtemperatur wird die Wasserstoffperoxidzugabe wiederholt und 24 h stehen gelassen. Die entstandene Suspension wird dann abgesaugt und die erhaltenen 0,3 g Kristalle an der Säule gereinigt. Fp. 92-94°C.

Mit dieser Verbindung wird die Synthese analog der in Beispiel 1 gegebenen Vorschrift durchgeführt. Im Dünnschichtchromatogramm kann das Sulfon sowohl vom Sulfoxid als auch von der Mercaptoverbindung durch den $R_F$-Wert unterschieden werden. Es zeigt sich bei der Verfolgung des Reaktionsverlaufs, dass als Zwischenstufe das in Beispiel 2 beschriebene Sulfoxid bei beiden Methoden auftritt.

*Beispiel 4:*

*3-(Octadec-9t-enylmercapto)propanol-(1)-phosphorsäuremonocholinester*

3-(Octadec-9t-enylmercapto)propionsäuremethylester werden mit 69% Ausbeute nach der in Beispiel 1 beschriebenen Arbeitsweise mit Elaidinbromid als Öl erhalten. Die Lithiumaluminiumhydridreduktion führt mit 83% Ausbeute zum 3-(Octadec-9t-enylmercapto)propanol mit einem Fp. 38-40°C, das analog der in Beispiel 1 gegebenen Vorschrift phosphoryliert und mit Trimethylamin umgesetzt wird. Ausbeute 9%, Fp. 238-243°C. Das Produkt enthält 2 mol Wasser.

*Beispiel 5:*

*3-(Octadec-9t-ensulfonyl)propanol-(1)-phosphorsäuremonocholinester*

1,4 g der nach Beispiel 4 erhaltenen Verbindung werden in 35 ml Eisessig gelöst, innerhalb 2 h 0,5 ml Perhydrol in 2 Portionen zugegeben und bei Raumtemperatur 24 h stehen gelassen. Dann wird mit Wasser versetzt, eingeengt, in Chloroform aufgenommen und mit Ether ausgefällt. Von dem amorphen, hygroskopischen Produkt lässt sich kein Schmelzpunkt machen. Nach der Analyse enthält es 3 mol Wasser.

*Beispiel 6:*

*3-Hexadecylmercaptopropanol-(1)-phosphorsäuremonocholinester*

Der β-Hexadecylmercaptopropionsäuremethylester wird analog der in Beispiel 1 gegebenen Vorschrift in 88% Ausbeute mit 1-Hexadecylbromid erhalten (hygroskopische Kristalle) und daraus mit Lithiumaluminiumhydrid in 95% Ausbeute 3-Hexadecylmercaptopropanol vom Fp. 50-51°C. Die Phosphorylierung und Umsetzung mit Trimethylamin liefert schliesslich das gewünschte

Produkt mit 11% Ausbeute. Die dünnschichtchromatographisch einheitlichen Kristalle haben einen Fp. von 240° C Zers. Sie enthalten 2,5 mol Wasser.

*Beispiel 7:*

*3-Hexadecansulfonylpropanol-(1)-phosphorsäuremonocholinester*

Die Oxidation der im vorstehenden Beispiel beschriebenen Verbindung in Eisessig mit 30%ig. Wasserstoffperoxid liefert mit 70% Ausbeute die gewünschte Verbindung. Eine Schmelzpunktbestimmung ist nicht durchführbar, weil das Produkt an der Luft klebrig wird. Es enthält 1,5 mol Wasser.

*Beispiel 8:*

*3-(3,7,11,15-Tetramethylhexadecylmercapto)-propanol-(1)-phosphorsäuremonocholinester*

1-Brom-3,7,11,15-tetramethylhexadecan (nach „Helv. Chim. Acta", *12*, 915/1929 hergestellt) wird analog der in Beispiel 1 gegebenen Vorschrift mit β-Mercaptopropionester umgesetzt: 82% Ausbeute, gelbliches Öl, dann mit Lithiumaluminiumhydrid reduziert: 90% Ausbeute, gelbliches Öl und schliesslich phosphoryliert und mit Trimethylamin umgesetzt. Nach der üblichen Reinigung wird ein amorphes Produkt mit 15% Ausbeute erhalten, das 3 mol Wasser enthält.

*Beispiel 9:*

*3-(3,7,11,15-Tetramethylhexadecansulfonyl)-propanol-(1)-phosphorsäuremonocholinester*

Die Oxidation der nach Beispiel 8 erhaltenen Verbindung wird in der in Beispiel 3 beschriebenen Weise durchgeführt und liefert das gewünschte Produkt in 86% Ausbeute, ebenfalls in amorphem Zustand. Es enthält 2 mol Wasser.

*Beispiel 10:*

*3-Heptadecylmercaptopropanol-(1)-phosphorsäuremonocholinester*

In analoger Weise wie in Beispiel 1 beschrieben werden die folgenden Umsetzungen durchgeführt:

1-Bromheptadecan mit β-Mercaptopropionsäuremethylester, 88% Ausbeute, Öl.

Die Lithiumaluminiumhydridreduktion dieses Esters gibt mit 88% Ausbeute 3-Heptadecylmercaptopropanol, Fp. 48-51° C und mit 21% Ausbeute wird die gewünschte Verbindung erhalten, Fp. 246° C, Zers. nach Phosphorylierung und Umsetzung mit Trimethylamin. Sie enthält 1 mol Wasser.

*Beispiel 11:*

*3-Heptadecansulfonylpropanol-(1)-phosphorsäuremonocholinester*

Das nach Beispiel 10 erhaltene Produkt wird in üblicher Weise mit Wasserstoffperoxid in Eisessig oxidiert. Ausbeute 76%. Eine Fusionspunktbestimmung ist nicht möglich, weil das Produkt klebrig ist. Es enthält 2 mol Wasser.

*Beispiel 12:*

*3-Eicosylmercaptopropanol-(1)-phosphorsäuremonocholinester*

Eicosylbromid wird mit β-Mercaptopropionsäuremethylester ebenso wie die nachfolgenden Reaktionsschritte analog der in Beispiel 1 gegebenen Vorschrift umgesetzt. Ausbeute 74%, Fp. 48-50° C.

Die Lithiumaluminiumhydridreduktion liefert mit 76% 3-Eicosylmercaptopropanol, Fp. 58-60° C. Die Phosphorylierung und Cholinbildung schliesslich geben das gewünschte Produkt mit 16% Ausbeute. Fp. 235-238° C, Zers. Es enthält 2 mol Wasser.

*Beispiel 13:*

*3-Eicosansulfonylpropanol-(1)-phosphorsäuremonocholinester*

Das nach Beispiel 12 erhaltene Produkt wird mit Perhydrol in Eisessig bei Raumtemperatur oxidiert. Die Ausbeute beträgt 76%, Fp. 210-229° C, Zers. Die Kristalle enthalten 3 mol Wasser.

*Beispiel 14:*

*3-Dodecylmercaptopropanol-(1)-phosphorsäuremonocholinester*

Analog der in Beispiel 1 gegebenen Vorschrift verläuft auch diese Synthese:

β-Dodecylmercaptopropionsäuremethylester, Öl, Ausbeute quantitativ, 3-Dodecylmercaptopropanol, Öl, das beim Abkühlen erstarrt, Ausbeute 94%.

Die Phosphorylierung und Cholinbildung verläuft mit 16% Ausbeute, Fp. 229-231° C, Zers. Das Produkt enthält 1 mol Wasser.

*Beispiel 15:*

*3-Dodecansulfonylpropanol-(1)-phosphorsäuremonocholinester*

Das nach Beispiel 14 erhaltene Produkt wird in üblicher Weise mit Wasserstoffperoxid in Eisessig oxidiert. Ausbeute 74%, Fp. 95-99° C, Zers. Das Produkt enthält 2 mol Wasser.

*Beispiel 16:*

*3-(2-Pentadecyloxyethylmercapto)propanol-(1)-phosphorsäuremonocholinester*

2,8 g Natrium werden in 34 ml Ethylenglykol aufgelöst, 53,5 ml 1-Brompentadecan zugegeben und 15 h bei 150° C gerührt. Nach Abkühlen wird mit Essigester/Ligroin 1:2 extrahiert, eingeengt und an einer Kieselgelsäule mit Ligroin chromatographiert. Ausbeute 29%, Öl, das beim Stehen fest wird.

10 g davon werden mit 1,4 ml Phosphortribromid und 0,6 ml Pyridin 5 h bei Raumtemperatur gerührt, auf Eis gegossen, mit Ether extrahiert und an der Säule gereinigt. Ausbeute an öligem 1-(2-Bromethoxy)pentadecan 60%. Die folgenden Reaktionen werden nun wieder analog der in Beispiel 1 stehenden Vorschrift durchgeführt. So wird β-(2-Pentadecyloxyethylmercapto)propionsäuremethylester mit 69% erhalten und 3-(2-Pentadecyloxyethylmercapto)propanol, Fp. 44-47°C, mit 95% Ausbeute.

Nach Umsetzung mit Bromethylphosphorsäuredichlorid und Einwirkung von Trimethylamin wird das gewünschte Produkt mit 31% Ausbeute erhalten, Fp. 231-233°C, Zers. Es enthält 1 mol Wasser.

*Beispiel 17:*

*3-(2-Pentadecyloxy)ethansulfonylpropanol-(1)-phosphorsäuremonocholinester*

Die in Beispiel 16 beschriebene Verbindung wird in üblicher Weise mit Perhydrol in Eisessig oxidiert. Nach Einengen der mit Wasser versetzten Lösung wird mit Ether ausgerührt und dadurch Kristallisation bewirkt. Es werden hygroskopische Kristalle vom Zersetzungspunkt 95°C mit 75% Ausbeute erhalten. Sie enthalten 2 mol Wasser.

*Beispiel 18:*

*3-[3-(Octadecansulfonyl)propoxyphosphoryloxyhydroxy]propyltrimethylammoniumhydroxid*

3-Brom-1-propanol wird mit Phosphoroxychlorid analog der in „Helv. Chim. Acta", *33*, 349/1958 mitgeteilten Vorschrift für 2-Bromethanol umgesetzt und das erhaltene Esterdichlorid vom Kp. 130-134°C/17 mmHg (≅ 2,3 kPa) in der in Beispiel 1 gegebenen Weise mit dem in Beispiel 3 beschriebenen 3-(Octadecansulfonyl)propanol umgesetzt. Nach erfolgter Reaktion mit Trimethylamin werden 25% des genannten Produkts vom Fp. 226-229°C, Zers. erhalten.

*Beispiel 19:*

*2-[3-(Octadecansulfonyl)propoxyphosphoryloxyhydroxy]-2-methylethyltrimethylammoniumhydroxid*

1-Brom-2-propanol wird mit Phosphoroxychlorid analog der in „Helv. Chim. Acta", *33*, 349/1958 mitgeteilten Vorschrift für 2-Bromethanol umgesetzt und das erhaltene Esterdichlorid vom Kp. 110°C/18 mmHg (≅ 2,4 kPa) in der in Beispiel 1 gegebenen Weise mit dem in Beispiel 3 beschriebenen 3-(Octadecansulfonyl)propanol umgesetzt. Nach erfolgter Reaktion mit Trimethylamin werden 3,1% der gewünschten Verbindung vom Fp. 203°C, Zers. erhalten. Sie kristallisiert mit 2 mol Wasser.

*Beispiel 20:*

*2-Methoxy-3-octadecylmercaptopropanol-(1)-phosphorsäuremonocholinester*

A. Zu 6,37 g 2-O-Methylglycerin in 70 ml absolutem Pyridin tropft man bei 0°C unter Rühren 7,7 ml Benzolsulfochlorid. Der Ansatz bleibt über Nacht im Kühlschrank stehen und wird dann auf 150 g Eis gegossen. Die wässerige Phase extrahiert man mit Methylenchlorid, schüttelt die organische Phase mit 2N-Salzsäure, Natriumbicarbonatlösung und Wasser, trocknet und engt ein. Der Rückstand wird auf eine Kieselgelsäule (500 g; Elutionsmittel: Toluol/Aceton i.V. 3:1) gegeben. Man erhält 7,2 g ≅ 48,6% des 2-O-Methylglycerinmonobenzolsulfonats (Öl).

B. Man löst 1,74 g festes Kaliumhydroxid in 60 ml absolutem Ethanol. Bei Zimmertemperatur tropft man unter Rühren eine Lösung von 8,88 g Octadecylmercaptan in 60 ml absolutem Ethanol zu. Nach 1 h tropft man die Lösung von 6,93 g 2-O-Methylglycerinmonobenzolsulfonat in 30 ml absolutem Ethanol zu und lässt 1,5 h bei Zimmertemperatur nachrühren. Anschliessend wird auf 1 l Eiswasser gegossen. Man säuert mit 2N-Salzsäure an, extrahiert mit Ether, trocknet die organische Phase und engt ein. Den Rückstand reinigt man über eine Kieselgelsäule (500 g; Elutionsmittel: Ether/Ligroin i.V. 1:1). Man erhält 6,1 g ≅ 58% des 2-Methoxy-3-octadecylmercaptopropanols (Fp. 44-47°C).

C. Zu 6,0 g 2-Methoxy-3-octadecylmercaptopropanol in 80 ml absolutem Toluol gibt man 5,67 g Triethylamin und tropft bei 0°C unter Rühren die Lösung von 4,91 g 2-Bromethylphosphorsäuredichlorid in 50 ml absolutem Toluol zu. Nach 4 h bei 0°C lässt man über Nacht bei Zimmertemperatur rühren, kühlt auf 0°C, gibt 67 ml 0,1 N wässerige Kaliumchloridlösung zu und lässt 1 h bei 0°C und 2 h bei Zimmertemperatur kräftig rühren. Die Toluolphase wird dann abgetrennt, getrocknet und eingeengt. Den Rückstand nimmt man in 45 ml absolutem Methanol/30 ml absolutem Chloroform auf, filtriert und sättigt die Lösung mit trocknem Trimethylamin. Dann wird 16 h unter Rückfluss gekocht und anschliessend eingeengt. Den Rückstand nimmt man in 180 ml absolutem Methanol auf, versetzt mit 2,88 g Silberacetat, lässt 1,5 h bei Zimmertemperatur rühren, saugt ab, wäscht mit absolutem Methanol nach und engt das Filtrat ein. Der Rückstand wird dann über eine Kieselgelsäule gereinigt (100 g; Elutionsmittel: Chloroform/Methanol/Wasser i.V. 65:25:4). Man erhält so 1,8 g ≅ 19,6% des gewünschten 2-Methoxy-3-octadecylmercaptopropanol-(1)-phosphorsäuremonocholinester. Das angefallene amorphe Produkt wird durch Lösen in absolutem Chloroform und Ausfällen mit Aceton zum Kristallisieren gebracht (Fp. 251-252°C). Die Substanz enthält 2 mol Wasser.

*Beispiel 21:*

*2-Methoxy-3-octadecansulfinylpropanol-(1)-phosphorsäuremonocholinester*

Wie in Beispiel 2 beschrieben wird 2-Methoxy-3-octadecylmercaptopropanol-(1)-phosphorsäuremonocholinester mit 30%ig. Wasserstoffperoxid in Eisessig behandelt. Das Rohprodukt wird mehrmals mit Aceton verrieben und so zur Kristallisation gebracht. Fp. 81°C (Sintern), 120-122°C (Zerfliessen), 270-272°C (Zers.), Ausbeute 75,7%. Die Substanz enthält 2 mol Wasser.

*Beispiel 22:*

*2-Methoxy-3-octadecansulfonylpropanol-(1)-phosphorsäuremonocholinester*

Wie in Beispiel 3 beschrieben wird 2-Methoxy-3-octadecylmercaptopropanol-(1)-phosphorsäuremonocholinester mit 30%ig. Wasserstoffperoxid in Eisessig behandelt. Das Rohprodukt wird

mehrmals mit Aceton verrieben und so zur Kristallisation gebracht. Ausbeute 73,5%, Fusionspunkt nicht bestimmbar. Die Substanz enthält 2 mol Wasser.

*Beispiel 23:*

*3-(2-Pentadecylmercaptoethylmercapto)propanol-(1)-phosphorsäuremonocholinester*

Ausgehend von 3-(2-Pentadecylmercaptoethylmercapto)propanol, Fp. 53-55°C erhält man nach der in Beispiel 1 gegebenen Vorschrift die gewünschte Verbindung als hygroskopische Kristalle vom Zersetzungspunkt 237°C, die 2 mol Wasser enthalten.

Das Ausgangsmaterial wird wie folgt erhalten:

Eine Lösung aus 2,3 g Natrium in 80 ml Methanol, die 12 g 3-Mercaptopropionsäuremethylester und 12,5 g 2-Bromethanol enthält, wird 4 h unter Rückfluss gerührt. Nach Einengen wird in Chloroform aufgenommen, filtriert und eingeengt. Man erhält 16 g 3-(2-Hydroxyethylmercapto)propionsäuremethylester als Öl.

8,2 g davon werden in 27 ml abs. Ether gelöst, 0,8 ml Pyridin zugegeben und unter Eiskühlung 1,9 ml Phosphortribromid zugetropft. Anschliessend rührt man 5 h bei Raumtemperatur. Dann gibt man Eiswasser dazu, extrahiert mit Ether, der mit Wasser gewaschen, getrocknet und eingeengt wird und erhält so 10,1 g eines Öls, das mit 480 g Kieselgel chromatographiert wird. Elutionsmittel: Ligroin/Ether (2:1). Ausbeute 7,1 g 3-(2-Bromethylmercapto)propionsäuremethylester als Öl.

5,9 g davon werden weiter wie folgt umgesetzt. Eine Lösung von 0,6 g Natrium in 30 ml Methanol, die 6,3 g 1-Mercaptopentadecan und 5,9 g Ester enthält, wird 3 h unter Rückfluss erhitzt. Dann kühlt man ab und erhält nach Lösen in Ether, Filtrieren und Einengen 9,4 g kristallinen 3-(2-Pentadecylmercaptoethylmercapto)propionsäuremethylester. Diese Menge wird in 80 ml absolutem Ether gelöst und zu einer Lösung von 0,66 g Lithiumaluminiumhydrid in 50 ml absolutem Ether getropft. Nach 30 min Rückfluss arbeitet man wie üblich auf und erhält 7,8 g 3-(2-Pentadecylmercaptoethylmercapto)propanol als dünnschichtchromatographisch einheitliches Produkt vom Fp. 53-55°C.

*Beispiel 24:*

*3-[3-Octadecylmercaptopropoxy)phosphoryloxyhydroxy]propyltrimethylammoniumhydroxid*

Eine Mischung aus 1 g Phosphorsäure-3-brompropylesterdichlorid, 1 g 3-Octadecylmercaptopropanol und 1,4 ml Triethylamin in 20 ml absolutem Methylenchlorid wird bei −5°C 30 min und im Eisbad 1 h gerührt. Dann lässt man über Nacht bei Raumtemperatur stehen, hydrolysiert nach Zugabe von 20 ml 0,1 N-Kaliumchloridlösung durch 4stündiges Rühren bei 40°C, gibt 40 ml Methanol zu, säuert mit konz. Salzsäure an und trennt die organische Phase ab. Man erhält so nach Einengen 1,5 g, die in 30 ml einer Mischung aus Chloroform/Methanol (1:1) gelöst werden. Nach 1stündigem Einleiten von Trimethylamingas rührt man 3 h bei 40°C nach. Dann engt man ein und rührt die Kristalle mit Aceton aus. Man löst sie wieder in 55 ml Methanol und rührt nach Zugabe von 0,4 g Silberacetat 3 h bei Raumtemperatur. Nach Stehen über Nacht filtriert man, engt ein und reinigt das Endprodukt durch Säulenchromatographie, wie in Beispiel 1 beschrieben. Man erhält so 0,7 g = 40% hydroskopische Kristalle, die nach der Elementaranalyse 4,5 mol Wasser enthalten. Fp. 228-230°C, Zers.

*Beispiel 25:*

*2-Methyl-3-octadecylmercaptopropanol-(1)-phosphorsäuremonocholinester*

Zu einer Lösung von 0,12 g Natrium in 70 ml Methanol gibt man 14,3 g Octadecylmercaptan und tropft dann im Eisbad 5 g Methacrylsäuremethylester zu. Nach 1stündigem Nachrühren bei Raumtemperatur saugt man die Suspension kalt ab, wäscht mit kaltem Methanol und trocknet. Man erhält so 16,3 g schmierige Kristalle = 88% dünnschichtchromatographisch einheitlichen α-Methyl-β-octadecylmercaptopropionsäuremethylester. Die Reduktion wird mit 1,14 g Lithiumaluminiumhydrid in 320 ml wasserfreiem Ether durchgeführt und gibt 14,2 g = 94% 2-Methyl-3-octadecylmercaptopropanol, Fp. 37-39°C.

Die Phosphorylierung, Hydrolyse und Cholinbildung wird nach der in Beispiel 1 gegebenen Vorschrift durchgeführt. Man erhält 27% des im Dünnschichtchromatogramm einheitlichen, gewünschten Produkts, Fp. 234-238°C. Es kristallisiert mit 1,5 mol Wasser.

*Beispiel 26:*

*3-(2-Pentadecansulfonylethylmercapto)propanol-(1)-phosphorsäuremonocholinester*

0,7 g Natrium werden in 80 ml Methanol gelöst. Nacheinander werden 2,4 g Mercaptoethanol und 9 g Pentadecylbromid zugegeben und die Mischung 3 h bei 60°C gerührt. Dann wird in Ether aufgenommen, vom Natriumbromid abgetrennt und eingeengt. Der Rückstand wird säulenchromatographisch gereinigt. Elution mit Ligroin/Ether 1:1, Ausbeute 8,9 g = 97% 2-Pentadecylmercaptoethanol vom Fp. 44-46°C. 13 g dieser Verbindung werden in 310 ml Eisessig mit Perhydrol oxidiert, bis im Dünnschichtchromatogramm ein einheitlicher Fleck zu sehen ist. Man erhält so 11,1 g = 77% 2-Pentadecansulfonylethanol, Fp. 64-66°C. Daraus wird mit Phosphortribromid in Ether in Gegenwart von Pyridin mit 49% das 2-Pentadecansulfonylethylbromid vom Fp. 68°C Schäumen, 85°C klare Schmelze erhalten.

Die weitere Umsetzung erfolgt nun analog nach den in Beispiel 1 gemachten Angaben und führt zu folgenden weiteren Zwischenprodukten:

β-(2-Pentadecansulfonylethylmercapto)-propionsäuremethylester, als Rohprodukt zur Reduktion eingesetzt.

3-(2-Pentadecansulfonylethylmercapto)propanol, Fp. 73-75°C.

Daraus wird schliesslich die gewünschte Verbindung mit 12% Ausbeute erhalten, Fp. 54°C, Sintern, 229-232°C, langsame Zersetzung unter Braunfärbung. Sie enthält 2,5 mol Wasser.

*Beispiel 27:*

*3-(2-Methoxyoctadecylmercapto)propanol-(1)-phosphorsäuremonocholinester*

Diese Verbindung wird mit 30% Ausbeute analog der in Beispiel 1 gegebenen Vorschrift erhalten. Nach der Elementaranalyse enthält sie 2,5 mol Wasser. Ein Schmelzpunkt ist wegen des stark hygroskopischen Verhaltens nicht angebbar.

Ausgangsmaterial ist 3-(2-Methoxyoctadecylmercapto)propanol, ein farbloses Öl, das beim Stehen allmählich erstarrt, und wie folgt erhalten wird:

α-Bromstearinsäure, Fp. 47-51°C, durch Bromieren von Stearinsäure erhalten, wird mit Methanol und katalytischen Mengen p-Toluolsulfosäure verestert, der ölige Ester mit Natriummethylat zum α-Methoxystearinsäuremethylester (Fp. 33-36°C) umgesetzt und mit Lithiumaluminiumhydrid zum 2-Methoxystearylalkohol, Fp. 36-38°C reduziert (97% Ausbeute). Mit Phosphortribromid erhält man öliges 2-Methoxystearylbromid (20% Ausbeute), das mit β-Mercaptopropionsäuremethylester zum öligen β-(2-Methoxyoctadecylmercapto)propionsäuremethylester (33% Ausbeute) umgesetzt wird. Eine erneute Lithiumaluminiumhydridreduktion liefert mit 94% Ausbeute das gewünschte Propanol.

*Beispiel 28:*

*2-(3-Octadecylmercaptopropoxyphosphorylhydroxy)-2-methylethyltrimethylammoniumhydroxid*

Das in Beispiel 19 beschriebene Phosphoresterdichlorid wird mit 3-Octadecylmercaptopropanol, dessen Herstellung in Beispiel 1 beschrieben ist, nach der dort gegebenen Vorschrift umgesetzt. Man erhält mit 50% Ausbeute das Bromid der gewünschten Verbindung. Der Schmelzpunkt der mit Silberacetat erhaltenen bromfreien Verbindung liegt bei 61°C (Sintern), 139°C (Zerfliessen), 200°C (Zers.).

*Beispiel 29:*

*2-Methyl-3-octadecansulfonylpropanol-(1)-phosphorsäuremonocholinester*

Die Oxidation der in Beispiel 25 beschriebenen Verbindung mit 30%ig. Wasserstoffperoxid in Eisessig liefert mit 49% Ausbeute das Sulfon vom Fp. 59°C (Sintern), 227-234°C (Zers.).

*Beispiel 30:*

*3-Tetradecylmercaptopropanol-(1)-phosphorsäuremonocholinester*

10 g 1-Bromtetradecan und 4 ml β-Mercaptopropionsäuremethylester werden in einer Lösung von 0,83 g Natrium in 110 ml Methanol 4 h unter Rückfluss gerührt. Dann engt man im Vakuum ein, nimmt den Rückstand in Ligroin auf, filtriert und dampft das Filtrat ein. Der Rückstand (11 g; Fp. 32°C) wird in 55 ml wasserfreiem Ether gelöst und zu einer Lösung von 0,94 g Lithiumaluminiumhydrid in 110 ml wasserfreiem Ether rasch zugetropft. Nach halbstündigem Rückfluss lässt sich im Dünnschichtchromatogramm kein Ausgangsmaterial mehr nachweisen. Man arbeitet in üblicher Weise auf und erhält 9,45 g 3-Tetradecylmercaptopropanol vom Fp. 34-38°C, die analog der in Beispiel 1 gegebenen Vorschrift umgesetzt werden. Es werden 1,9 g = 58% der gewünschten Verbindung als Monohydrat vom Sinterpunkt 63°C und Zersetzungspunkt 231-233°C erhalten.

*Beispiel 31:*

*2-Methyl-3-octadecansulfinylpropanol-(1)-phosphorsäuremonocholinester*

2-Methyl-3-octadecylmercaptopropanol, dessen Herstellung in Beispiel 25 beschrieben ist, wird in üblicher Weise mittels 30%ig. Wasserstoffperoxid in Eisessig zum Sulfoxid oxidiert und nach Reinigung an der Kieselgelsäule (Lösungsmittel Chloroform/Methanol 9:1) mit 55% Ausbeute erhalten. Fp. 56-58°C.

Die Phosphorylierung und Cholinesterbildung werden nach der in Beispiel 1 gegebenen Vorschrift durchgeführt. Man erhält nach üblicher Reinigung 12% Kristalle mit 1,5 mol Wasser vom Zersetzungspunkt 235-240°C.

*Beispiel 32:*

*N-[2-(3-Hexadecylmercaptopropoxyphosphoryloxyhydroxy)ethyl]-N,N-diethylamin*

A. Analog der in Beispiel 6 gegebenen Vorschrift unter Ersatz von Trimethylamin durch Diethylamin erhält man die gewünschte Verbindung mit 15% Ausbeute. Sie sintert bei 66°C und schmilzt klar bei 104-110°C. Sie kristallisiert mit ½ mol Wasser.

B. Bei Verwendung einer 33%ig. Lösung von Dimethylamin in Ethanol erhält man mit 9% Ausbeute

*N-[2-(3-Hexadecylmercaptopropoxyphosphoryloxyhydroxy)ethyl]-N,N-dimethylamin*

Diese Verbindung kristallisiert ebenfalls mit ½ mol Wasser, sintert bei 84°C und schmilzt klar bei 145-150°C.

C. Bei Verwendung einer 33%ig. Lösung von Methylamin in Ethanol erhält man mit 19% Ausbeute

*N-[2-(3-Hexadecylmercaptopropoxyphosphoryloxyhydroxy)ethyl]-N-methylamin*

Der Sinterpunkt liegt bei 91°C, die Substanz schmilzt bei weiterem Erhitzen klar bei 194°C.

D. Schliesslich erhält man bei Verwendung einer konzentrierten, wässerigen Ammoniaklösung mit einer Ausbeute von 11%

*2-(3-Hexadecylmercaptopropoxyphosphoryloxyhydroxy)ethylamin*

Der Sinterpunkt liegt bei 170°C, bei 195°C beginnt das Schmelzen und bei 218°C liegt eine braune Schmelze vor. Die Verbindung kristallisiert mit ½ mol Wasser.

*Beispiel 33:*

*3-Hexadecylmercapto-2-methylpropanol-(1)-phosphorsäuremonocholinester*

In analoger Weise wie in Beispiel 25 beschrieben, aber mit Hexadecylmercaptan, werden folgende Verbindungen synthetisiert:
α-Methyl-β-hexadecylmercaptopropionsäuremethylester; gelbes Öl, 79% Ausbeute
2-Methyl-3-hexadecylmercaptopropanol; weisse, zähe Masse, 99% Ausbeute

Das Monohydrat der gewünschten Verbindung sintert bei 60°C und zersetzt sich langsam bei 229-235°C.

*Beispiel 34:*

*2,2-Dimethyl-3-hexadecylmercaptopropanol-(1)-phosphorsäuremonocholinester*

Ausgehend von 2,2-Dimethyl-1,3-propandiol erhält man in analoger Weise nach der in Beispiel 20, Teil A gegebenen Vorschrift 56% des entsprechenden Monobenzolsulfonats als farbloses Öl.

In analoger Weise wie in Beispiel 20, Teil B beschrieben erhält man durch Umsetzung mit Hexadecylmercaptan 2,2-Dimethyl-3-hexadecylmercaptopropanol, Fp. 25-28°C, mit 16% Ausbeute. Schliesslich phosphoryliert man analog Teil C in Beispiel 20 und erhält nach Reaktion mit Trimethylamin die gewünschte Verbindung mit 34% Ausbeute. Sie enthält 1,5 mol Wasser, sintert bei 70°C, beginnt bei 228°C zu schmelzen und zersetzt sich bei 235-238°C.

*Beispiel 35:*

*Cis- bzw. trans-3-Octadecylmercaptocyclohexanol-(1)-phosphorsäuremonocholinester*

Ausgehend von 1,3-Cyclohexandiol, das als cis-trans-Gemisch vorliegt, erhält man durch Umsetzung mit Benzolsulfochlorid nach der in Beispiel 20, Teil A beschriebenen Arbeitsweise das entsprechende Monobenzolsulfonat, ebenfalls als öliges cis-trans-Gemisch mit 62% Ausbeute.

Die Umsetzung mit Octadecylmercaptan analog Beispiel 20, Teil B liefert nach Auftrennung des Isomerengemisches an der Kieselgelsäule je 12% des 3-Octadecylmercaptocyclohexanols. Elutionsmittel: Ether/Ligroin 1:4.

Aufgrund der NMR-spektroskopischen Untersuchung wird das Produkt mit dem Fp. 50-52°C als cis-Verbindung (= beide Substituenten in 1,3-Stellung in äquatorialer Lage) gedeutet, die andere Fraktion mit dem Fp. 44-46°C als trans-Verbindung.

Beide Substanzen werden nun in üblicher Weise phosphoryliert und mit Trimethylamin umgesetzt. So erhält man aus der cis-Verbindung die oben genannte Verbindung vom Sinterpunkt 51°C und einem Schmelzpunkt von 241-244°C unter Zersetzung, aus der trans-Verbindung das oben genannte Isomer vom Sinterpunkt 45°C und dem Schmelzpunkt 239-241°C unter Zersetzung.

Beide Produkte enthalten nach der Elementaranalyse (C,H,N,P,S-Bestimmung) 1,5 mol Wasser.

*Beispiel 36:*

*3-(14-Methoxytetradecylmercapto)propanol-(1)-phosphorsäuremonocholinester*

1,14-Dibromtetradecan, Fp. 38-40°C, wird analog „Org. Synth.", Coll. vol. I, 29, in 92% Ausbeute aus dem entsprechenden Diol („Helv.", *9*, 271/1926) erhalten.

3,6 g davon werden zu einer Lösung von 0,23 g Natrium in 40 ml Methanol + 1,1 ml β-Mercaptopropionsäuremethylester gegeben und die Suspension 4 h unter Rückfluss gerührt. Man engt ein, rührt den Rückstand mit Ether aus, trennt die etherische Lösung ab, engt sie ein und chromatographiert den Rückstand an einer Kieselgelsäule mit Ether/Ligroin 1:10. Die gewünschten Fraktionen werden vereinigt und ergeben nach dem Einengen 1,6 g = 41% β-(14-Bromtetradecylmercapto)-propionsäuremethylester vom Fp. 33-35°C.

Der daraus mit Natriummethylatlösung nach 15stündigem Kochen erhaltene β-(14-Methoxytetradecylmercapto)propionsäuremethylester muss ebenfalls an der Säule gereinigt werden. Ausbeute: 11%, Fp. 31-32°C.

0,8 g davon werden in 25 ml wasserfreiem Ether mit 62 mg Lithiumaluminiumhydrid reduziert und ergeben 0,6 g = 86% 3-(14-Methoxytetradecylmercapto)propanol, vom Fp. 35-37°C.

Diese Verbindung wird nun analog Beispiel 20, Teil C, phosphoryliert und zum Cholinester umgesetzt. Man erhält so 26% des Monohydrats, das bei 76°C sintert und bei 238-244°C unter Zersetzung schmilzt.

*Beispiel 37:*

*N-[2-(3-Hexadecylmercaptopropoxyphosphoryloxyhydroxy)ethyl]-N-methyl-N,N-diethylammoniumhydroxid*

3,7 g der nach Beispiel 32, Teil A hergestellten Verbindung werden in 37 ml Tetrahydrofuran zusammen mit 4,2 g Natriumbicarbonat in 50 ml Wasser und 8,5 ml Methyljodid 2 h bei Raumtemperatur gerührt. Danach war im Dünnschichtchromatogramm der Ausgangsmaterialfleck verschwunden und ein neuer Hauptfleck entstanden. Nach Einengen im Vakuum wird in Chloroform aufgenommen, filtriert, eingeengt, mit Silberacetat in Methanol die Base hergestellt und säulenchromatographisch wie in Beispiel 1 beschrieben gereinigt. Die Ausbeute beträgt 13%. Die Verbindung sintert bei 40°C und zersetzt sich bei 119°C. Sie enthält 4,5 mol Wasser.

*Beispiel 38:*

*2-Isopropyl-3-octadecylmercaptopropanol-(1)-phosphorsäuremonocholinester*

10,1 g Isopropylmalonsäurediethylester werden in 150 ml wasserfreiem Ether mit 2,7 g Lithiumaluminiumhydrid in üblicher Weise reduziert. Es werden 5,9 g eines im DC-einheitlichen Öles erhalten.

In analoger Weise wie im Teil A des Beispiels 20 beschrieben, setzt man nun mit Benzolsulfochlorid zum Monobenzolsulfonat des 2-Isoprop-

ylpropan-1,3-diols um, das mit 42% Ausbeute als farbloses Öl erhalten wird.

In analoger Weise wie in Beispiel 20, Teil B beschrieben, erhält man daraus mit 87% Ausbeute das 2-Isopropyl-3-octadecylmercaptopropanol vom Fp. 29°C.

Schliesslich phosphoryliert man nach Teil C, Beispiel 20 und setzt weiter mit Trimethylamin zum gewünschten Endprodukt um. Man erhält so 37% Kristalle mit 1,5 mol Wasser vom Sinterpunkt 55°C und Schmelzpunkt 230-233°C unter Zersetzung.

*Beispiel 39:*

*4-Heptadecylmercapto-3-methyl-n-butanol-(2)-phosphorsäuremonocholinester*

In analoger Weise wie vorstehend wird das Benzolsulfonat des 1-Hydroxy-2-methyl-3-butanons mit 30% Ausbeute als Öl erhalten. Die Umsetzung mit Heptadecylmercaptan ergibt nach säulenchromatographischer Reinigung mit 61% Ausbeute das 1-Heptadecylmercapto-2-methyl-3-butanon als Öl. Schliesslich führt die Lithiumaluminiumhydridreduktion mit 85% Ausbeute zum DC-einheitlichen 1,2-Dimethyl-3-heptadecylmercaptopropanol, Fp. 28-30°C. Dessen Phosphorylierung und Cholinesterbildung erfolgten in der in Beispiel 20, Teil C gegebenen Weise und liefert mit 13% Ausbeute die gewünschte Verbindung, die mit 1,5 mol Wasser kristallisiert. Sie sintert bei 55°C und schmilzt bei 230-233°C unter Zersetzung.

*Beispiel 40:*

*3-Octadecylmercaptobutanol-(1)-phosphorsäuremonocholinester*

2 g 3-Octadecylmercaptobutanol, Fp. 35-38°C, wird in der in Beispiel 20, Teil C gegebenen Weise phosphoryliert und zum Cholinester umgesetzt (1,85 g = 59%). Nach Reinigung an der Kieselgelsäule sintern die Kristalle bei 58°C, verfärben sich ab 208°C und zersetzen sich bei 232°C. Die Verbindung kristallisiert mit 1,5 mol Wasser.

Das Ausgangsmaterial wird wie folgt erhalten: 1,3-Butylenglykol wird mit Acetanhydrid bei Raumtemperatur zum 1,3-Butandiol-1-acetat umgesetzt. Ausbeute: 63%.

In Gegenwart von Pyridin wird dann mit Benzolsulfochlorid verestert und das Reaktionsprodukt über eine Kieselgelsäule mit Ether/Ligroin 1:1 eluiert. Ausbeute: 24% eines farblosen Öles, das nach der in Beispiel 20, Teil B gegebenen Vorschrift mit Octadecanthiolnatrium umgesetzt und dann mit verdünnter Natronlauge behandelt wird, wobei 12% 3-Octadecylmercaptobutanol, Fp. 35-38°C, resultieren.

*Beispiel 41:*

*3-(9-Octyloxynonylmercapto)propanol-(1)-phosphorsäuremonocholinester*

Analog Beispiel 20, Teil C phosphoryliert man 3-(9-Octyloxynonylmercapto)propanol, Fp. 29-32°C, und erhält nach der dort gegebenen weiteren Arbeitsweise mit 39% Ausbeute den gewünschten Cholinester, der mit 1,75 mol Wasser kristallisiert. Der Sinterpunkt liegt bei 50°C, bei weiterem Erhitzen zersetzt sich die Substanz bei 221-224°C.

*Beispiel 42:*

*3-(4-Tridecyloxybutylmercapto)propanol-(1)-phosphorsäuremonocholinester*

Man löst 2,3 g Natrium in 44 ml 1,4-Butandiol durch Erwärmen, gibt 38 ml 1-Bromtridecan dazu und rührt 5 h bei 150°C Badtemperatur. Nach Abkühlen extrahiert man mit einer Mischung aus Ether/Ligroin 1:2, dampft ein und reinigt an einer Kieselgelsäule durch Elution mit Ligroin, das später durch Ether/Ligroin 1:1 ersetzt wird. Die gewünschten Fraktionen werden gesammelt und eingeengt. So werden 19,4 g dünnschichtchromatographisch einheitliches 4-Tridecyloxybutanol vom Fp. 26-29°C in 71% Ausbeute erhalten.

10 g davon werden in 100 ml Ether gelöst, 0,6 ml Pyridin zugegeben und 1,4 ml Phosphortribromid zugetropft, wobei im Eisbad gekühlt wird. Nach Stehen über Nacht bei Raumtemperatur verdünnt man mit Ether, schüttelt mit Eiswasser durch, trennt den Etherextrakt ab, trocknet und engt ihn ein. Der Rückstand, 9,2 g eines gelblichen Öles, wird mit Ether/Ligroin 1:1 über eine Kieselgelsäule gegeben. Die einheitlichen Fraktionen werden vereinigt und eingeengt. Man erhält so 5,5 g = 45% DC-einheitliches 4-Tridecyloxybutylbromid als gelbliches Öl.

Dieses Bromid wird mit 1,9 g β-Mercaptopropionsäuremethylester in 75 ml Methanol, das 378 mg Natrium enthält, 3 h unter Rückfluss gerührt. Die Lösung wird dann eingeengt und der Rückstand wieder säulenchromatographisch gereinigt. Elutionsmittel: Ether/Ligroin 1:10. Man erhält so 5,7 g = 93% β-(4-Tridecyloxybutylmercapto)propionsäuremethylester als gelbliches Öl.

Dieser Ester wird in 70 ml Ether mit 0,4 g Lithiumaluminiumhydrid reduziert. Nach 1stündigem Rühren unter Rückfluss zersetzt man in üblicher Weise und eluiert den Ethereindampfrückstand an der Kieselgelsäule mit Ether/Ligroin 1:1. Man erhält so 4 g = 77% 3-(4-Tridecyloxybutylmercapto)propanol, Fp. 32-34°C als DC-einheitliches Produkt.

Die Umsetzung zum gewünschten Endprodukt wird analog nach der in Beispiel 20, Teil C gegebenen Vorschrift durchgeführt. Man erhält 2,1 g = 33% vom Sinterpunkt 55°C und dem Zersetzungspunkt 218°C. Das Produkt kristallisiert mit 2,5 mol Wasser.

*Beispiel 43:*

*3-Pentadecylmercaptopropanol-(1)-phosphorsäuremonocholinester*

1-Brompentadecan wird in üblicher Weise mit β-Mercaptopropionester umgesetzt und der erhaltene Sirup mit Lithiumaluminiumhydrid zum 3-Pentadecylmercaptopropanol, Fp. 36-39°C, reduziert. Ausbeute: 84%.

Die weiteren Reaktionsschritte werden analog Beispiel 20, Teil C durchgeführt. Sie führen mit

61% Ausbeute zum gewünschten Produkt vom Sinterpunkt 60°C und dem Zersetzungspunkt 237°C. Es kristallisiert mit 1,25 mol Wasser.

*Beispiel 44:*

*5-Hexadecylmercaptopentanol-(1)-phosphorsäuremonocholinester*

5-Hexadecylmercaptopentanol, Fp. 40-43°C (aus 1,5-Pentandiol über das ölige Monobenzolsulfonat mit Hexadecylmercaptankalium in 63% Ausbeute erhalten), wird in üblicher Weise (s. Beispiel 20, Teil C) phosphoryliert und zum Cholinester umgesetzt. Die Ausbeute beträgt 41%. Die wasserlöslichen Kristalle haben einen Sinterpunkt von 58°C und zersetzen sich bei 228-230°C. Das Produkt kristallisiert mit 1,5 mol Wasser.

*Beispiel 45:*

*3-(10-n-Butoxydecyloxyethylmercapto)-propanol-(1)-phosphorsäuremonocholinester*

3-(10-n-Butoxydecyloxyethylmercapto)-propanol, Fp. 23-27°C, wird in der in Beispiel 20, Teil C angegebenen Weise phosphoryliert und zum Cholinester umgesetzt. Mit 35% Ausbeute wird die gewünschte Verbindung als wasserlösliche Kristalle vom Fp. 36°C (Sintern 227-229°C (Zers.) erhalten.

Die hygroskopischen Kristalle liegen als Dihydrat vor.

Das Ausgangsmaterial wird wie folgt erhalten: 1,10-Decandiolmononatrium wird mit n-Butylbromid umgesetzt und gibt mit 62% Ausbeute öliges 10-n-Butoxydecanol. Dieses wird mit Phosphortribromid in Gegenwart von Pyridin bromiert. Ausbeute: 37% Öl. Nach Umsetzung dieses 10-n-Butoxydecylbromids mit Ethylenglykolmononatrium wird 36% öliges 10-n-Butoxydecyloxyethanol erhalten, das wieder mit Phosphortribromid in Gegenwart von Pyridin umgesetzt wird und 52% öliges 10-n-Butoxydecyloxyethylbromid gibt. Dessen Umsetzung mit β-Mercaptopropionsäuremethylester in Gegenwart von Natriummethylat liefert 49% öligen β-(10-n-Butoxydecyloxyethylmercapto)propionsäuremethylester, der in bekannter Weise mit Lithiumaluminiumhydrid reduziert wird und mit 90% Ausbeute 3-(10-n-Butoxydecyloxyethylmercapto)-propanol vom Fp. 23-27°C gibt.

*Beispiel 46:*

*3-(11-Hexyloxyundecylmercapto)propanol-(1)-phosphorsäuremonocholinester*

11-Brom-1-undecanol, Fp. 45-48°C, wird mit Natriumhexanolat umgesetzt und das erhaltene sirupöse Produkt mit Phosphortribromid in Gegenwart von Pyridin zur Reaktion gebracht. Die Struktur des erhaltenen Öles wird massenspektroskopisch als 11-Bromundecyloxyhexan bestätigt. Diese Bromverbindung wird mit β-Mercaptopropionsäuremethylester in Natriummethylatlösung umgesetzt und das erhaltene Öl anschliessend mit Lithiumaluminiumhydrid zum 3-(11-Hexyloxyundecylmercapto)propanol, Fp. 27-29°C, reduziert. Die Phosphorylierung und Cholinesterbildung erfolgt analog Beispiel 20, Teil C und gibt das gewünschte Produkt mit 55% Ausbeute als Monohydrat vom Fp. 98°C (Sintern), 226-229°C (Zers.).

*Beispiel 47:*

*3-(7-Decyloxyheptylmercapto)propanol-(1)-phosphorsäuremonocholinester*

3-(7-Decyloxyheptylmercapto)propanol, Fp. 28-32°C, durch Umsetzung von 1,7-Heptandiol mit 1-Bromdecan zum 7-Decyloxyheptanol, Bromierung zum 7-Decyloxyheptylbromid, Reaktion mit β-Mercaptopropionsäuremethylester zum β-(7-Decyloxyheptylmercapto)propionsäuremethylester und dessen Reduktion mit Lithiumaluminiumhydrid erhalten, wird, wie in Beispiel 20, Teil C beschrieben, mit 17% Ausbeute zum gewünschten Cholinester umgesetzt. Die wasserlöslichen, weissen Kristalle sintern bei 53°C und schmelzen bei 224°C.

In analoger Weise erhält man aus 3-(3-Tetradecyloxypropylmercapto)propanol, Fp. 38-41°C (hergestellt aus β-Mercaptopropionsäuremethylester und 1-Brom-3-tetradecyloxypropan in Natriummethylatlösung und nachfolgende Reduktion mit Lithiumaluminiumhydrid) mit 38% Ausbeute den

*3-(3-Tetradecyloxypropylmercapto)propanol-(1)-phosphorsäuremonocholinester*

der bei 52°C sintert und unter Zersetzung bei 230-233°C schmilzt.

*Beispiel 48:*

Analog Beispiel 20 C erhält man durch Umsetzung von 3-Hexadecylmercapto-2-methoxypropanol-(1) (wachsartige Substanz) mit 2-Bromethylphosphorsäureesterdichlorid, anschliessender Verseifung, Behandlung mit Trimethylamin und Silberacetat den

*3-Hexadecylmercapto-2-methoxypropanol-(1)-phosphorsäuremonocholinester*

(Fp. 255-256°C) in einer Ausbeute von 16%. Die Substanz enthält 1 mol Kristallwasser.

Das als Ausgangsmaterial verwendete 3-Hexadecylmercapto-2-methoxypropanol-(1) erhält man durch Umsetzung des 2-Methoxy-1,3-propandiolmonobenzolsulfonats (ölige Substanz) mit dem Natriumsalz des Hexadecylmercaptans.

*Beispiel 49:*

Analog Beispiel 48 erhält man durch Verwendung von 3-Heptadecylmercapto-2-methoxypropanol-(1) (wachsartige Substanz) als Ausgangsmaterial den

*3-Heptadecylmercapto-2-methoxypropanol-(1)-phosphorsäuremonocholinester*

(Fp. 255-257°C) in einer Ausbeute von 11%. Die Substanz enthält 2 mol Kristallwasser.

Das als Ausgangsmaterial verwendete 3-Heptadecylmercapto-2-methoxypropanol-(1) erhält man durch Umsetzung von 2-Methoxy-1,3-propandiolmonobenzolsulfonat mit dem Natriumsalz des Heptadecylmercaptans.

*Beispiel 50:*

Analog Beispiel 48 erhält man durch Verwendung von 2-Ethoxy-3-heptadecylmercaptopropanol-(1) (wachsartige Substanz; Fp. <50°C) als Ausgangsmaterial den

*2-Ethoxy-3-heptadecylmercaptopropanol-(1)-phosphorsäuremonocholinester*

(Fp. 225-230°C) in einer Ausbeute von 18%. Die Substanz enthält 2 mol Kristallwasser.

Das als Ausgangsmaterial verwendete 2-Ethoxy-3-heptadecylmercaptopropanol-(1) erhält man durch Umsetzung des 2-Ethoxy-1,3-propandiolmonobenzolsulfonats (ölige Substanz) mit dem Kaliumsalz des Heptadecylmercaptans.

*Beispiel 51:*

Analog Beispiel 48 erhält man durch Verwendung von 2-Methoxy-3-(transoctadec-9-enylmercapto)propanol-(1) (wachsartige Substanz) als Ausgangsmaterial den

*2-Methoxy-3-(transoctadec-9-enylmercapto)-propanol-(1)-phosphorsäuremonocholinester*

(Wachs) in einer Ausbeute von 12%. Die Substanz enthält 3 mol Kristallwasser.

Das als Ausgangsmaterial verwendete 2-Methoxy-3-(transoctadec-9-enylmercapto)-propanol-(1) erhält man durch Umsetzung des 2-Methoxy-1,3-propandiolmonobenzolsulfonats mit dem Natriumsalz des Transoctadec-9-enylmercaptans.

*Beispiel 52:*

Analog Beispiel 48 erhält man durch Verwendung von 2-Methoxy-3-(octadec-9,12-dienylmercapto)propanol-(1) (wachsartige Substanz) als Ausgangsmaterial den

*2-Methoxy-3-(octadec-9,12-dienylmercapto)-propanol-(1)-phosphorsäuremonocholinester*

(Wachs) in einer Ausbeute von 11%. Die Substanz enthält 3 mol Kristallwasser.

Das als Ausgangsmaterial verwendete 2-Methoxy-3-(octadec-9,12-dienylmercapto)-propanol-(1) erhält man durch Umsetzung des 2-Methoxy-1,3-propandiolmonobenzolsulfonats mit dem Natriumsalz des Octadec-9,12-dienylmercaptans.

*Beispiel 53:*

Analog Beispiel 48 erhält man durch Verwendung von 2-Methoxy-3-(1-methyloctadecylmercapto)propanol-(1) (wachsartige Substanz) als Ausgangsmaterial den

*2-Methoxy-3-(1-methyloctadecylmercapto)-propanol-(1)-phosphorsäuremonocholinester*

(Fp. 256-258°C) in einer Ausbeute von 34%. Die Substanz enthält 2 mol Kristallwasser.

Das als Ausgangsmaterial verwendete 2-Methoxy-3-(1-methyloctadecylmercapto)-propanol-(1) erhält man durch Umsetzung des 2-Methoxy-1,3-propandiolmonobenzolsulfonats mit dem Kaliumsalz des 1-Methyloctadecylmercaptans.

*Beispiel 54:*

Analog Beispiel 48 erhält man durch Verwendung von 3-(3-Heptyldecylmercapto)-2-methoxypropanol-(1) (wachsartige Substanz) als Ausgangsmaterial den

*3-(3-Heptyldecylmercapto)-2-methoxypropanol-(1)-phosphorsäuremonocholinester*

(Wachs) in einer Ausbeute von 48%. Die Substanz enthält 1 mol Kristallwasser.

Das als Ausgangsmaterial eingesetzte 3-(3-Heptyldecylmercapto)-2-methoxypropanol-(1) erhält man durch Umsetzung des 2-Methoxy-1,3-propandiolmonobenzolsulfonats mit dem Kaliumsalz des 3-Heptyldecylmercaptans.

*Beispiel 55:*

Analog Beispiel 48 erhält man durch Verwendung von 2-Methoxy-3-(3-tetradecyloxypropylmercapto)propanol(1) (wachsartige Substanz) als Ausgangsmaterial den

*2-Methoxy-3-(3-tetradecyloxypropylmercapto)-propanol-(1)-phosphorsäuremonocholinester*

(Fp. 242-244°C) in einer Ausbeute von 18%. Die Substanz enthält 2 mol Kristallwasser.

Das als Ausgangsmaterial eingesetzte 2-Methoxy-3-(3-tetradecyloxypropylmercapto)-propanol-(1) erhält man durch Umsetzung des 2-Methoxy-1,3-propandiolmonobenzolsulfonats mit dem Kaliumsalz des 3-Tetradecyloxypropylmercaptans.

*Beispiel 56:*

Analog Beispiel 48 erhält man durch Verwendung von 3-(5-Dodecyloxypentylmercapto)-2-methoxypropanol-(1) als Ausgangsmaterial den

*3-(5-Dodecyloxypentylmercapto)-2-methoxypropanol-(1)-phosphorsäuremonocholinester*

(Fp. 245-247°C) in einer Ausbeute von 25%. Die Substanz enthält 2 mol Kristallwasser.

Das als Ausgangsmaterial eingesetzte 3-(5-Dodecyloxypentylmercapto)-2-methoxypropanol-(1) erhält man durch Umsetzung des 2-Methoxy-1,3-propandiolmonobenzolsulfonats mit dem Kaliumsalz des 5-Dodecyloxypentylmercaptans.

*Beispiel 57:*

Analog Beispiel 48 erhält man durch Verwendung von 2-Methoxy-3-(8-nonyloxyoctylmercapto)propanol-(1) (wachsartige Substanz) als Ausgangsmaterial den

*2-Methoxy-3-(8-nonyloxyoctylmercapto)-propanol-(1)-phosphorsäuremonocholinester*

(Wachs) in einer Ausbeute von 20%. Die Substanz enthält 1 mol Kristallwasser.

Das als Ausgangsmaterial eingesetzte 2-Methoxy-3-(8-nonyloxyoctylmercapto)propanol-(1) erhält man durch Umsetzung des 2-Methoxy-1,3-propandiolmonobenzolsulfonats mit dem Kaliumsalz des 8-Nonyloxyoctylmercaptans.

*Beispiel 58:*

Analog Beispiel 48 erhält man durch Verwendung von 2-Ethyl-3-hexadecylmercaptopropanol-(1) (wachsartige Substanz) als Ausgangsmaterial den

*2-Ethyl-3-hexadecylmercaptopropanol-(1)-phosphorsäuremonocholinester*

(Fp. 236-238°C) in einer Ausbeute von 41%. Die Substanz enthält 2 mol Kristallwasser.

Das als Ausgangsmaterial eingesetzte 2-Ethyl-3-hexadecylmercaptopropanol-(1) erhält man durch Umsetzung des 2-Ethyl-1,3-propandiolmonobenzolsulfonats mit dem Natriumsalz des Hexadecylmercaptans.

*Beispiel 59:*

Analog Beispiel 48 erhält man durch Verwendung von 3-Hexadecylmercapto-2-propylpropanol-(1) (wachsartige Substanz) als Ausgangsmaterial den

*3-Hexadecylmercapto-2-propylpropanol-(1)-phosphorsäuremonocholinester*

(Fp. 239-240°C) in einer Ausbeute von 13%. Die Substanz enthält 2 mol Kristallwasser.

Das als Ausgangsmaterial eingesetzte 3-Hexadecylmercapto-2-propylpropanol-(1) erhält man durch Umsetzung des 2-Propyl-1,3-propandiolmonobenzolsulfonats (ölige Substanz) mit dem Natriumsalz des Hexadecylmercaptans.

*Beispiel 60:*

Analog Beispiel 48 erhält man durch Verwendung von 2-n-Butyl-3-octadecylmercaptopropanol-(1) (wachsartige Substanz; Fp. 36-40°C) als Ausgangsmaterial den

*2-n-Butyl-3-octadecylmercaptopropanol-(1)-phosphorsäuremonocholinester*

(Fp. 232-238°C) in einer Ausbeute von 17%. Die Substanz enthält 4 mol Kristallwasser.

Das als Ausgangsmaterial eingesetzte 2-n-Butyl-3-octadecylmercaptopropanol-(1) erhält man durch Umsetzung des 2-n-Butyl-1,3-propandiolmonobenzolsulfonats (ölige Substanz) mit dem Natriumsalz des Octadecylmercaptans.

*Beispiel 61:*

Analog Beispiel 48 erhält man durch Verwendung von 2-Benzyloxy-3-octadecylmercaptopropanol-(1) (wachsartige Substanz; Fp. 39-42°C) als Ausgangsmaterial den

*2-Benzyloxy-3-octadecylmercaptopropanol-(1)-phosphorsäuremonocholinester*

(Fp. 210-212°C) in einer Ausbeute von 28%. Die Substanz enthält 1 mol Kristallwasser.

Das als Ausgangsmaterial eingesetzte 2-Benzyloxy-3-octadecylmercaptopropanol-(1) erhält man durch Umsetzung des 2-Benzyloxy-1,3-propandiolmonobenzolsulfonats (ölige Substanz) mit dem Natriumsalz des Octadecylmercaptans.

*Beispiel 62:*

Analog Beispiel 48 erhält man durch Verwendung von 3-Hexadecylmercapto-2-methoxymethylpropanol-(1) (wachsartige Substanz) als Ausgangsmaterial den

*3-Hexadecylmercapto-2-methoxymethylpropanol-(1)-phosphorsäuremonocholinester*

(Fp. 243-245°C) in einer Ausbeute von 22%. Die Substanz enthält 3 mol Kristallwasser.

Das als Ausgangsmaterial eingesetzte 3-Hexadecylmercapto-2-methoxymethylpropanol-(1) erhält man durch Umsetzung des 2-Methoxymethyl-1,3-propandiolmonobenzolsulfonats (ölige Substanz) mit dem Natriumsalz des Hexadecylmercaptans.

*Beispiel 63:*

Analog Beispiel 48 erhält man durch Verwendung von 2-Ethoxymethyl-3-hexadecylmercaptopropanol-(1) (wachsartige Substanz) als Ausgangsmaterial den

*2-Ethoxymethyl-3-hexadecylmercaptopropanol-(1)-phosphorsäuremonocholinester*

(Fp. 243-246°C) in einer Ausbeute von 11%. Die Substanz enthält 2,5 mol Kristallwasser.

Das als Ausgangsmaterial eingesetzte 2-Ethoxymethyl-3-hexadecylmercaptopropanol-(1) erhält man durch Umsetzung des 2-Ethoxymethyl-1,3-propandiolmonobenzolsulfonats (ölige Substanz) mit dem Natriumsalz des Hexadecylmercaptans.

*Beispiel 64:*

Analog Beispiel 48 erhält man durch Verwendung von 2,2-Bismethoxymethyl-3-octadecylmercaptopropanol-(1) (wachsartige Substanz) als Ausgangsmaterial den

*2,2-Bismethoxymethyl-3-octadecylmercaptopropanol-(1)-phosphorsäuremonocholinester*

(Fp. 237-239°C) in einer Ausbeute von 26%. Die Substanz enthält 1 mol Kristallwasser.

Das als Ausgangsmaterial eingesetzte 2,2-Bismethoxymethyl-3-octadecylmercaptopropanol-(1) erhält man durch Umsetzung des 2,2-Bismethoxymethyl-1,3-propandiolmonobenzolsulfonats (ölige Substanz) mit dem Natriumsalz des Octadecylmercaptans.

*Beispiel 65:*

Analog Beispiel 48 erhält man durch Verwendung von 3-Heptadecylmercapto-2-methoxy-2-methylpropanol-(1) (wachsartige Substanz) als Ausgangsmaterial den

*3-Heptadecylmercapto-2-methoxy-2-methylpropanol-(1)-phosphorsäuremonocholinester*

(Fp. 244-251°C) in einer Ausbeute von 19%. Die Substanz enthält 2 mol Kristallwasser.

Das als Ausgangsmaterial eingesetzte 3-Heptadecylmercapto-2-methoxy-2-methylpropanol-(1) erhält man durch Umsetzung des 2-Methylglycidsäuremethylesters mit dem Natriumsalz des Heptadecylmercaptans zum 3-Heptadecylmercapto-2-hydroxy-2-methylpropionsäuremethylester (Fp. 42-45°C), anschliessender Methylierung mit Methyljodid zum 3-Heptadecylmercapto-2-methoxy-2-methylpropionsäuremethylester (ölige Substanz) und Reduktion mit Lithiumaluminiumhydrid.

*Beispiel 66:*

Analog Beispiel 48 erhält man durch Verwendung von 4-Hexadecylmercaptobutanol-(2) (wachsartige Substanz) als Ausgangsmaterial den

*4-Hexadecylmercaptobutanol-(2)-phosphorsäuremonocholinester*

(Wachs) in einer Ausbeute von 19%. Die Substanz enthält 2,5 mol Kristallwasser.

Das als Ausgangsmaterial eingesetzte 4-Hexadecylmercaptobutanol-(2) erhält man durch Reduktion des 4-Hexadecylmercaptobutanon-(2) (Fp. 45-47°C) mit Lithiumaluminiumhydrid.

*Beispiel 67:*

Analog Beispiel 48 erhält man durch Verwendung von 4-Octadecylmercaptopentanol-(2) (wachsartige Substanz) als Ausgangsmaterial den

*4-Octadecylmercaptopentanol-(2)-phosphorsäuremonocholinester*

(Fp. 239-245°C) in einer Ausbeute von 7%. Die Substanz enthält 3 mol Kristallwasser.

Das als Ausgangsmaterial eingesetzte 4-Octadecylmercaptopentanol-(2) erhält man durch Umsetzung des 2,4-Pentandiolmonobenzolsulfonats (ölige Substanz) mit dem Natriumsalz des Octadecylmercaptans.

*Beispiel 68:*

Analog Beispiel 48 erhält man durch Verwendung von 3-Hexadecylmercaptocyclopentanol-(1) (wachsartige Substanz; Fp. 45-50°C) als Ausgangsmaterial den

*3-Hexadecylmercaptocyclopentanol-(1)-phosphorsäuremonocholinester*

(Fp. 253-256°C) in einer Ausbeute von 33%. Die Substanz enthält 2 mol Kristallwasser.

Das als Ausgangsmaterial eingesetzte 3-Hexadecylmercaptocyclopentanol-(1) erhält man durch Umsetzung des 1,3-Cyclopentandiolmonobenzolsulfonats (ölige Substanz) mit dem Natriumsalz des Hexadecylmercaptans.

*Beispiel 69:*

Analog Beispiel 48 erhält man durch Verwendung von (S)-2-Methansulfonamido-3-octadecylmercaptopropanol-(1) (Fp. 85-87°C) als Ausgangsmaterial den

*(S)-2-Methansulfonamido-3-octadecylmercaptopropanol-(1)-phosphorsäuremonocholinester*

(Fp. 212-215°C Zers.) in einer Ausbeute von 14%. Die Substanz enthält 1 mol Kristallwasser.

Das als Ausgangsmaterial eingesetzte (S)-2-Methansulfonamido-3-octadecylmercaptopropanol-(1) erhält man durch Umsetzung des (L)-S-Octadecylcysteinethylesters mit Methansulfochlorid zum (L)-N-Methansulfonyl-S-octadecylcysteinethylester (Fp. 63-65°C) und anschliessender Reduktion mit Lithiumaluminiumhydrid.

*Beispiel 70:*

Analog Beispiel 48 erhält man durch Verwendung von 3-Hexadecylmercapto-2-methoxymethylpropanthiol-(1) (Öl) als Ausgangsmaterial den

*Thiophosphorsäure-O-cholinester-S-(3-hexadecylmercapto-2-methoxymethylpropyl)ester*

(Fp. 230-235°C Zers.) in einer Ausbeute von 14%. Die Substanz enthält 3 mol Kristallwasser.

Das als Ausgangsmaterial eingesetzte 3-Hexadecylmercapto-2-methoxymethylpropanthiol-(1) erhält man durch Umsetzung von 3-Hexadecylmercapto-2-methoxymethylpropanol-(1) mit Benzolsulfochlorid zum 3-Hexadecylmercapto-2-methoxymethylpropanol-(1)-benzolsulfonat (ölige Substanz), Reaktion mit Thioharnstoff zum entsprechenden Isothiuroniumsalz, anschliessende Hydrolyse mit 10N-Kaliumhydroxidlösung und Ansäuern mit Salzsäure.

*Beispiel 71:*

Analog Beispiel 48 erhält man durch Verwendung von 3-[2-(N-Dodecylaminocarbonyl)ethylmercapto]-2-methoxypropanol-(1) (Fp. 67-69°C) als Ausgangsmaterial den

*3-[2-(N-Dodecylaminocarbonyl)ethylmercapto]-2-methoxypropanol-(1)-phosphorsäuremonocholinester*

(wachsartige Substanz) in einer Ausbeute von 16%. Die Substanz enthält 4 mol Kristallwasser.

Das als Ausgangsmaterial eingesetzte 3-[2-(N-Dodecylaminocarbonyl)ethylmercapto]-2-methoxypropanol-(1) erhält man durch Umsetzung des 2-Methoxy-1,3-propandiolmonobenzolsulfonats mit dem Natriumsalz des 2-(N-Dodecylaminocarbonyl)ethylmercaptans. Dieses Mercaptan erhält man durch Reaktion des 3-Mercaptopropionsäureethylesters mit Dodecylamin.

*Beispiel 72:*

Analog Beispiel 48 erhält man durch Verwendung von 2-Methoxy-3-(9-phenyloctadecylmercapto)propanol-(1) (ölige Substanz) als Ausgangsmaterial den

*2-Methoxy-3-(9-phenyloctadecylmercapto)-propanol-(1)-phosphorsäuremonocholinester*

(wachsartige Substanz) in einer Ausbeute von 10%. Die Substanz enthält 2 mol Kristallwasser.

Das als Ausgangsmaterial eingesetzte 2-Methoxy-3-(9-phenyloctadecylmercapto)-propanol-(1) erhält man durch Umsetzung von 2-Methoxy-1,3-propandiolmonobenzolsulfonat mit

dem Natriumsalz des 9-Phenyloctadecylmercaptans.

*Beispiel 73:*

Analog Beispiel 48 erhält man durch Verwendung von 3-[11-(N-n-Butylaminocarbonyl)undecylmercapto]-2-methoxypropanol-(1) (Fp. 62-64°C) als Ausgangsmaterial den

*3-[11-(N-n-Butylaminocarbonyl)undecylmercapto]-2-methoxypropanol-(1)-phosphorsäuremonocholinester*

(wachsartige Substanz) in einer Ausbeute von 13%. Die Substanz enthält 3,5 mol Kristallwasser.

Das als Ausgangsmaterial eingesetzte 3-[11-(N-n-Butylaminocarbonyl)undecylmercapto]-2-methoxypropanol-(1) erhält man durch Umsetzung von 2-Methoxy-1,3-propandiolmonobenzolsulfonat mit dem Natriumsalz des 11-(N-n-Butylaminocarbonyl)undecylmercaptans.

*Beispiel 74:*

Analog Beispiel 48 erhält man durch Verwendung von 2-Methoxy-3-octadecylmercaptopropanthiol-(1) (wachsartige Substanz) als Ausgangsmaterial den

*Thiophosphorsäure-O-cholinester-S-(2-methoxy-3-octadecylmercaptopropyl)ester*

(Fp. 219-221°C Zers.) in einer Ausbeute von 7%. Die Substanz enthält 4 mol Kristallwasser.

Das als Ausgangsmaterial eingesetzte 2-Methoxy-3-octadecylmercaptopropanthiol-(1) erhält man durch Umsetzung von 2-Methoxy-3-octadecylmercaptopropanol-(1) mit Benzolsulfochlorid zum 2-Methoxy-3-octadecylmercaptopropanol-(1)-benzolsulfonat (ölige Substanz), Reaktion mit Thioharnstoff zum entsprechenden Isothiuroniumsalz, anschliessende Hydrolyse mit 10N-Kaliumhydroxidlösung und Ansäuern mit Salzsäure.

*Beispiel 75:*

Analog Beispiel 48 erhält man durch Verwendung von 4-Octadecylmercaptopentanthiol-(2) (Fp. 38-40°C) als Ausgangsmaterial den

*Thiophosphorsäure-O-cholinester-S-(4-octadecylmercapto-2-pentyl)ester*

(Fp. 244-245°C Zers.) in einer Ausbeute von 9%. Die Substanz enthält 3,5 mol Kristallwasser. Das als Ausgangsmagerial eingesetzte 4-Octadecylmercaptopentanthiol-(2) erhält man durch Umsetzung von 4-Octadecylmercaptopentanol-(2) mit Benzolsulfochlorid zum 4-Octadecylmercaptopentanol-(2)-benzolsulfonat (ölige Substanz), Reaktion mit Thioharnstoff zum entsprechenden Isothiuroniumsalz, anschliessende Hydrolyse mit 10N-Kaliumhydroxidlösung und Ansäuern mit Salzsäure.

*Beispiel 76:*

*2-Methyl-2-methoxycarbonyl-3-hexadecylmercaptopropanol-(1)-phosphorsäuremonocholinester*

2,2-Bishydroxymethylmonobenzolsulfonatpropionsäuremethylester, Fp. 58-62°C, wird mit Hexadecylnatriummercaptid in Methanol zum 2-Hydroxymethyl-2-hexadecylmercaptomethylpropionsäuremethylester, Fp. 25-27°C, umgesetzt. Die Phosphorylierung, Hydrolyse und Cholinesterbildung erfolgt analog Beispiel 20 C und ergibt mit 31% Ausbeute das Monohydrat der gewünschten Verbindung vom Sinterpunkt 65°C und Zersetzungspunkt 238-240°C.

*Beispiel 77:*

*Thiophosphorsäure-O-cholinester-S-2-methyl-3-hexadecylmercaptopropylester*

Aus dem in Beispiel 33 beschriebenen 2-Methyl-3-hexadecylmercaptopropanol erhält man über dessen Benzolsulfonat beim Kochen mit Thioharnstoff in Ethanol das ölige 2-Methyl-3-hexadecylmercaptopropanthiol, dessen Phosphorylierung, Hydrolyse und Cholinesterbildung analog wie in Beispiel 20, Teil C, vorgenommen wird und mit 17% Ausbeute zum gewünschten Produkt führt, das, nach Sintern bei 45°C, bei 262°C unter Aufschäumen schmilzt. Die Verbindung liegt als Trihydrat vor.

*Beispiel 78:*

Analog Beispiel 48 erhält man unter Verwendung von 3-Hexadecylmercapto-2-(2-methoxyethoxy)propanol-(1) (ölige Substanz) als Ausgangsmaterial den

*3-Hexadecylmercapto-2-(2-methoxyethoxy)-propanol-(1)-phosphorsäuremonocholinester*

(Fp. 257-258°C Zers.) in einer Ausbeute von 18%. Die Substanz enthält 1 mol Kristallwasser.

Das als Ausgangsmaterial eingesetzte 3-Hexadecylmercapto-2-(2-methoxyethoxy)-propanol-(1) erhält man durch Umsetzung des 2-(2-Methoxyethoxy)-1,3-propandiolmonobenzolsulfonats (ölige Substanz) mit dem Kaliumsalz des Hexadecylmercaptans.

*Beispiel 79:*

*2-Hexadecyloxy-3-methylmercaptopropanol-(1)-phosphorsäuremonocholinester*

Zu 0,9 g (2,6 mmol) 2-Hexadecyloxy-3-methylmercaptopropanol-(1) in 15 ml abs. Toluol gibt man bei 0°C 0,95 g Triethylamin und tropfenweise eine Lösung von 0,95 g (3,6 mmol) 2-Bromethylphosphorsäureesterdichlorid in 15 ml abs. Toluol. Man lässt 5 h bei 0°C und über Nacht bei 20°C rühren. Man kühlt wieder auf 0°C, tropft 11 ml 0,1N wässerige Kaliumchloridlösung zu, lässt kräftig 1 h bei 0°C und 2 h bei 20°C rühren, trennt die Phasen, trocknet die organische und engt sie ein. Den öligen Rückstand löst man in 30 ml abs. Chloroform/30 ml abs. Methanol, leitet 10 min trockenes Trimethylamin ein und lässt 24 h unter Rückfluss kochen. Das Lösungsmittel wird dann abgezogen, der Rückstand in 50 ml abs. Methanol gelöst und mit 1 g Silberacetat versetzt. Man rührt 2 h bei Zimmertemperatur, saugt ab und engt das Filtrat ein. Der ölige Rückstand wird über 100 g Kieselgel gereinigt (Elutionsmittel: Methylenchlorid (65), Methanol (25), Wasser (4)).

Das Produkt wird nach Abziehen des Elutionsmittels und Trocknen aus Chloroform/Aceton umgefällt. Man erhält 0,24 g ≅ 18% eines amorphen, chromatographisch einheitlichen Produktes.

Das als Ausgangsmaterial eingesetzte 2-Hexadecyloxy-3-methylmercaptopropanol-(1) ist neu und wurde auf folgende Weise hergestellt:

1-Thioglycerin wurde mit Methyljodid zum 3-Methylmercapto-1,2-propandiol methyliert und anschliessend mit Natriumhydrid und 1-Bromhexadecan zu einem Gemisch der beiden isomeren Hexadecylether umgesetzt, die säulenchromatographisch getrennt wurden (wachsartige Substanzen).

*Beispiel 80:*

Analog Beispiel 79 erhält man durch Umsetzung von 2-Benzyl-3-hexadecylmercaptopropanol-(1) mit 2-Bromethylphosphorsäureesterdichlorid, anschliessender Verseifung sowie Reaktion mit Trimethylamin nach Behandlung mit Silberacetat den

*2-Benzyl-3-hexadecylmercaptopropanol-(1)-phosphorsäuremonocholinester*

Nach Umfällen aus Chloroform/Aceton erhält man die gewünschte Verbindung in einer Ausbeute von 13% mit einem Schmelzpunkt von 220-230°C unter (Zers.).

Das als Ausgangsmaterial eingesetzte 2-Benzyl-3-hexadecylmercaptopropanol-(1) ist neu und wurde auf folgende Weise hergestellt:

Benzylmalonsäurediethylester wird mit Lithiumaluminiumhydrid zum 2-Benzyl-1,3-propandiol (Fp. 64-65°C) reduziert und mit äquimolaren Mengen Benzolsulfochlorid in abs. Pyridin zum 2-Benzyl-1,3-propandiolmonobenzolsulfonat (ölige Substanz) verestert. Umsetzung mit dem Natriumsalz des Hexadecanthiols in Ethanol führt zum gewünschten 2-Benzyl-3-hexadecylmercaptopropanol-(1) (wachsartige Verbindung).

*Beispiel 81:*

Analog Beispiel 79 erhält man durch Umsetzung von 3-Hexadecylmercapto-2-phenylpropanol-(1) mit 2-Bromethylphosphorsäureesterdichlorid, anschliessender Verseifung sowie Reaktion mit Trimethylamin nach Behandlung mit Silberacetat den

*3-Hexadecylmercapto-2-phenylpropanol-(1)-phosphorsäuremonocholinester*

Nach Umfällen aus Chloroform/Aceton erhält man die gewünschte Verbindung in einer Ausbeute von 27% mit einem Schmelzpunkt von 245°C unter Zersetzung.

Das als Ausgangsmaterial eingesetzte 3-Hexadecylmercapto-2-phenylpropanol-(1) ist neu und wurde auf folgende Weise hergestellt:

Phenylmalonsäurediethylester wird mit Lithiumaluminiumhydrid zum 2-Phenyl-1,3-propandiol reduziert und mit äquimolaren Mengen Benzolsulfochlorid in abs. Pyridin zum 2-Phenyl-1,3-propandiolmonobenzolsulfonat (wachsartige Substanz) verestert. Umsetzung mit dem Kaliumsalz des Hexadecanthiols in Ethanol führt zum gewünschten 3-Hexadecylmercapto-2-phenylpropanol-(1) (wachsartige Substanz).

*Beispiel 82:*

Analog Beispiel 79 erhält man durch Umsetzung von 2-Allyl-3-hexadecylmercaptopropanol-(1) mit 2-Bromethylphosphorsäureesterdichlorid, anschliessender Verseifung sowie Reaktion mit Trimethylamin nach Behandlung mit Silberacetat den

*2-Allyl-3-hexadecylmercaptopropanol-(1)-phosphorsäuremonocholinester*

Nach Umfällen aus Chloroform/Aceton erhält man die gewünschte Verbindung in einer Ausbeute von 23% mit einem Schmelzpunkt von 235-238°C unter Zersetzung.

Das als Ausgangsmaterial eingesetzte 2-Allyl-3-hexadecylmercaptopropanol-(1) ist neu und wurde auf folgende Weise hergestellt:

Allylmalonsäurediethylester wird mit Lithiumaluminiumhydrid zum 2-Allyl-1,3-propandiol (Öl) reduziert und mit äquimolaren Mengen Benzolsulfochlorid in abs. Pyridin zum 2-Allyl-1,3-propandiolmonobenzolsulfonat (ölige Substanz) verestert. Umsetzung mit dem Natriumsalz des Hexadecanthiols in Ethanol führt zum gewünschten 2-Allyl-3-hexadecylmercaptopropanol-(1) (wachsartige Verbindung).

*Beispiel 83:*

Analog Beispiel 79 erhält man durch Umsetzung von 2-Methylen-3-octadecylmercaptopropanol-(1) mit 2-Bromethylphosphorsäureesterdichlorid, anschliessender Verseifung sowie Reaktion mit Trimethylamin nach Behandlung mit Silberacetat den

*2-Methylen-3-octadecylmercaptopropanol-(1)-phosphorsäuremonocholinester*

Nach Umfällen aus Chloroform/Aceton erhält man die gewünschte Verbindung in einer Ausbeute von 18% mit einem Schmelzpunkt von 235-237°C unter Zersetzung.

Das als Ausgangsmaterial eingesetzte 2-Methylen-3-octadecylmercaptopropanol-(1) ist neu und wurde auf folgende Weise hergestellt:

3-Brom-2-methoxy-2-methylpropanol-(1) wird mit dem Natriumsalz des Octadecanthiols in Ethanol umgesetzt. Dabei erhält man unter Abspaltung von Methanol das 2-Methylen-3-octadecylmercaptopropanol-(1) (wachsartige Substanz).

*Beispiel 84:*

*3-Tetradecylmercaptopropanol-(1)-phosphorsäuremonocholinester*

Zu einer Lösung von 0,3 g 2-Chlor-2-oxo-1,3,2-dioxaphospholan und 0,8 ml Triethylamin in 10 ml abs. Methylenchlorid tropft man bei −5 bis −10°C eine Lösung von 0,5 g 3-Tetradecylmercaptopropanol in 10 ml abs. Methylenchlorid zu. Man rührt die klare Lösung 2 h im Eisbad nach und

lässt über Nacht bei Raumtemperatur stehen. Dann engt man ein, gibt 2,5 ml Acetonitril, welches 0,24 g Trimethylamin enthält, hinzu und lässt im Autoklaven 8 h bei 60°C reagieren; der Vergleich mit dem nach Beispiel 30 hergestellten Produkt im Dünnschichtchromatogramm zeigt Identität an. Die Reinigung erfolgt nach den dort gemachten Angaben.

*Beispiel 85:*

*(+ bzw. −) 2-Methyl-3-hexadecylmercaptopropanol-(1)-phosphorsäuremonocholinester (= Enantiomeres A bzw. B)*

Der in Beispiel 33 beschriebene racemische α-Methyl-β-hexadecylmercaptopropionsäuremethylester wird mit 2N-Natronlauge unter Rückfluss verseift. Man erhält mit 91% Ausbeute rac. α-Methyl-β-hexadecylmercaptopropionsäure, Fp. 53-56°C.

Man verestert diese Säure mit N-Hydroxysuccinimid in Methylenchlorid in Gegenwart von Dicyclohexylcarbodiimid. Der aktivierte, rac. Ester, Fp. 51-54°C, wird mit 67% Ausbeute erhalten.

Die Umsetzung dieses Esters mit R (+) 1-Phenylethylamin in Methylenchlorid liefert 88% eines Gemisches der beiden diastereomeren Amide. Man trennt an der Kieselgelsäule mit Aceton/Toluol 1:30 und erhält so die beiden reinen Diastereomere:

| | Ausbeute | Fp. | $[\alpha]_D^{20}$ c = 1, $CHCl_3$ |
|---|---|---|---|
| Diastereomeres A | 17% | 88-90°C | +42,2° |
| Diastereomeres B | 17% | 71-73°C | +32,8° |

Jedes diastereomere Amid wird nun getrennt mit halbkonzentrierter Schwefelsäure verseift. Man erhält so mit 60 bzw. 63% Ausbeute die beiden enantiomeren α-Methyl-β-hexadecylmercaptopropionsäuren (c = 1, $CHCl_3$):

Fp. 56-59°C, $[\alpha]_{578}^{20}$ + 9,7° bzw.
Fp. 58-60°C, $[\alpha]_{578}^{20}$ − 8,7°.

Die Reduktion mit Lithiumaluminiumhydrid führt zu den enantiomeren 2-Methyl-3-hexadecylmercaptopropanolen (schaumige Produkte), die wie in Beispiel 1 beschrieben phosphoryliert, hydrolysiert und schliesslich mit Trimethylamin umgesetzt werden.

Nach der Endreinigung an der Kieselgelsäule erhält man die gewünschten Enantiomere.

| | Ausbeute | Mol Kristallwasser | Fp. | $[\alpha]_{578}^{20}$ c = 10, $CHCl_3$ |
|---|---|---|---|---|
| Enantiomeres A | 47% | 2 | 78°C Sintern, 241-245°C (Zers.) | +0,9° |
| Enantiomeres B | 52% | 2 | 55°C Sintern, 236-239°C (Zers.) | −1,2° |

*Versuchsprotokoll*

Die neuen schwefelhaltigen Substanzen werden hinsichtlich ihrer zytotoxischen Wirkung auf Tumorzellen der Maus in einem Screening untersucht. Als Target-Zellen werden einmal Zellen eines durch methylcholanthreninduzierten Tumors (MethA), der als Ascites in der Maus passagiert wird; zum anderen Abelsen-8,1-Lymphomzellen (Abls), die *in vitro* in Kultur gehalten werden, benutzt. Zum Screenen werden $5\times10^4$/ml dieser Zellen in Dulbecco's Modified Eagle's Medium, das mit 10% hitzeinaktiviertem fetalem Kälberserum, $5\times10^{-5}$ m Mercaptoethanol, 50 U Penicillin und 50 µg Streptomycin/ml angereichert ist, und verschiedenen Konzentrationen der neuen schwefelhaltigen Phospholipide zusammen für 24 h kultiviert. Die Kultivation findet bei 95% Luftfeuchtigkeit, 37°C, 10% $CO_2$ im Brutschrank statt. Die Wirkung der Substanzen wird durch den Vergleich des Wachstums der Tumorzellen im Medium mit den neuen schwefelhaltigen Phospholipiden zu einer Kontrollkultur ohne Substanz bestimmt. Als Vergleichssubstanz wird bei jedem Versuch 1-Octadecyl-2-methylglycero-3-phosphorylcholin* mitgeführt. Das Wachstum der MethA-Zellen wird durch den Einbau von $^3$H-Thymidin in die DNA der Zellen gemessen, das der Abls-Zellen durch die Bestimmung der alkalischen Phosphataseaktivität eines Aliquot der Kulturen. Für jede Substanz wird die Konzentration berechnet, bei der der Thymidineinbau bzw. die alkalische Phosphataseaktivität gegenüber einer unbehandelten Tumorzellkontrolle um 50% reduziert ist.

In der nachstehenden Tabelle werden Substanzen aufgeführt, die der mitgeführten Vergleichssubstanz überlegen sind. Die Überlegenheit dieser Substanzen ist durch einen Faktor ausgedrückt, der das Verhältnis der Vergleichssubstanz zu den einzelnen Substanzen der neuen schwefelhaltigen Phospholipide darstellt.

| Beispiel-Nr. | Faktor |
|---|---|
| Vergleichsverbindung | 1,0 |
| Bsp. 33 | 1,1 |
| Bsp. 42 | 1,4 |
| Bsp. 76 | 1,4 |
| Bsp. 20 | 1,7 |
| Bsp. 79 | 1,2 |
| Bsp. 55 | 1,5 |
| Bsp. 62 | 1,5 |
| Bsp. 65 | 1,5 |
| Bsp. 70 | 1,5 |
| Bsp. 63 | 1,2 |
| $\text{Faktor} = \frac{C_{50}\ 41\,386}{C_{50}\ \text{Substanz}}$ | |

* Aus DE-OS Nr. 2619686.

## Patentansprüche

1. Alkanolphosphorsäuremonoammoniumalkylester der Formel (I)

$$R_1-X-R_2-S(O)_n-R_3-Y-\overset{\displaystyle O}{\overset{\|}{P}}\underset{\displaystyle O^{\ominus}}{\underset{|}{}}-O-R_4-\overset{\oplus}{N}(R_5)_3 \quad (I)$$

in der
X einen Valenzstrich, Sauerstoff, Schwefel, die Sulfinyl- oder Sulfonylgruppe, die $-NHCO-$, $-CONH-$ oder $-NHCONH-$-Gruppe, einen $C_3$ bis $C_8$ Cycloalkylen- oder Phenylenrest,
Y Sauerstoff oder Schwefel,
$R_1$ Wasserstoff, einen geradkettigen oder verzweigten, gesättigten oder ungesättigten Alkylrest mit 1 bis 18 Kohlenstoffatomen, der gegebenenfalls ein- oder mehrfach durch Aryl, Halogen, eine niedere Alkoxy-, Alkylmercapto-, Alkoxycarbonyl-, Alkansulfinyl- oder Alkansulfonylgruppe substituiert ist,
$R_2$ eine geradkettige oder verzweigte, gesättigte oder ungesättigte Alkylenkette mit 1 bis 18 Kohlenstoffatomen, die gegebenenfalls ein- oder mehrfach durch Halogen, Aryl, eine niedere Alkoxy-, Alkoxycarbonyl-, Alkylmercapto-, Alkansulfinyl- oder Alkansulfonylgruppe substituiert ist,
$R_3$ eine geradkettige oder verzweigte, gesättigte oder ungesättigte Alkylenkette mit 2 bis 8 Kohlenstoffatomen, die auch Teil eines gegebenenfalls durch eine niedere Alkylgruppe substituierten Cyclopentan-, Cyclohexan- oder Cycloheptanringes sein kann und
die gegebenenfalls ein- oder mehrfach durch Hydroxy, Halogen, Nitril, eine Cycloalkyl-, Phenyl-, Alkoxycarbonyl-, gegebenenfalls alkylierte Carbamoyl-, Alkylmercapto-, Alkansulfinyl-, Alkansulfonyl-, gegebenenfalls acylierte Aminogruppe oder durch Alkoxy substituiert ist, das wiederum durch Aryl, Alkylmercapto, Alkansulfinyl, Alkansulfonyl, gegebenenfalls acyliertes $NH_2$, Alkoxycarbonyl, Nitril, Hydroxyl, Alkoxy oder gegebenenfalls alkyliertes Carbamoyl substituiert sein kann,
$R_4$ eine geradkettige oder verzweigte Alkylenkette mit 2 bis 4 Kohlenstoffatomen,
$R_5$ Wasserstoff oder eine niedere Alkylgruppe und
n die Zahlen 0, 1 oder 2
bedeuten,
mit der Massgabe, dass die Gruppe $R_1-X-R_2$ für den Fall, dass sie eine Alkylgruppe darstellt (X = Valenz), bis zu 20 C-Atome aufweist sowie deren pharmakologisch unbedenklichen Salze.

2. Verbindungen der Formel (I) gemäss dem Anspruch 1, in der $R_1$, $R_2$, $R_3$, Y und X die angegebene Bedeutung haben und $R_4$ eine $-CH_2-CH_2-$-Kette, $R_5$ die Methylgruppe und n die Zahl 0 darstellen.

3. Verbindungen der Formel (I) gemäss dem Anspruch 1, in der $R_3$ die angegebene Bedeutung hat, $R_4$ eine $-CH_2-CH_2-$-Kette, $R_5$ die Methylgruppe, Y Sauerstoff, n die Zahl 0 und $R_1$ und $R_2$ zusammen 16 bis 18 C-Atome aufweisen und X einen Valenzstrich oder Sauerstoff darstellt.

4. Verbindung der Formel (I) gemäss dem Anspruch 3, in der $R_1$, $R_2$, $R_4$, $R_5$, Y und n die angegebene Bedeutung haben und $R_3$ eine $-CH_2-CH_2-CH_2-$-Kette darstellt, deren mittleres C-Atom durch Hydroxyl, niederes Alkyl oder eine niedere Alkoxygruppe substituiert sein kann, wobei beide Gruppen wiederum durch Alkoxy substituiert sein können.

5. Verfahren zur Herstellung von Alkanolphosphorsäureammoniumalkylestern der Formel (I)

$$R_1-X-R_2-S(O)_n-R_3-Y-\overset{\displaystyle O}{\overset{\|}{P}}\underset{\displaystyle O^{\ominus}}{\underset{|}{}}-O-R_4-\overset{\oplus}{N}(R_5)_3 \quad (I)$$

in der
X einen Valenzstrich, Sauerstoff, Schwefel, die Sulfinyl- oder Sulfonylgruppe, die $-NHCO-$, $-CONH-$ oder $-NHCONH-$-Gruppe, einen $C_3$ bis $C_8$-Cycloalkylen- oder Phenylenrest,
Y Sauerstoff oder Schwefel,
$R_1$ Wasserstoff, einen geradkettigen oder verzweigten, gesättigten oder ungesättigten Alkylrest mit 1 bis 18 Kohlenstoffatomen, der gegebenenfalls ein- oder mehrfach durch Aryl, Halogen, eine niedere Alkoxy-, Alkylmercapto-, Alkoxycarbonyl-, Alkansulfinyl- oder Alkansulfonylgruppe substituiert ist,
$R_2$ eine geradkettige oder verzweigte, gesättigte oder ungesättigte Alkylenkette mit 1 bis 18 Kohlenstoffatomen, die gegebenenfalls ein- oder mehrfach durch Halogen, Aryl, eine niedere Alkoxy-, Alkoxycarbonyl-, Alkylmercapto-, Alkansulfinyl- oder Alkansulfonylgruppe substituiert ist,
$R_3$ eine geradkettige oder verzweigte, gesättigte oder ungesättigte Alkylenkette mit 2 bis 8 Kohlenstoffatomen, die auch Teil eines gegebenenfalls durch eine niedere Alkylgruppe substituierten Cyclopentan-, Cyclohexan- oder Cycloheptanringes sein kann und die gegebenenfalls ein- oder mehrfach durch Hydroxy, Halogen, Nitril, eine Cycloalkyl-, Phenyl-, Alkoxycarbonyl-, gegebenenfalls alkylierte Carbamoyl-, Alkylmercapto-, Alkansulfinyl-, Alkansulfonyl-, gegebenenfalls acylierte

Aminogruppe oder durch Alkoxy substituiert ist, das wiederum durch Aryl, Alkylmercapto, Alkansulfinyl, Alkansulfonyl, gegebenenfalls acyliertes $NH_2$, Alkoxycarbonyl, Nitril, Hydroxyl, Alkoxy oder gegebenenfalls alkyliertes Carbamoyl substituiert sein kann,
$R_4$ eine geradkettige oder verzweigte Alkylenkette mit 2 bis 4 Kohlenstoffatomen,
$R_5$ Wasserstoff oder eine niedere Alkylgruppe und
n die Zahlen 0, 1 oder 2
bedeuten
mit der Massgabe, dass die Gruppe $R_1-X-R_2$ für den Fall, dass sie eine Alkylgruppe darstellt (X = Valenz), bis zu 20 C-Atome aufweist sowie deren pharmakologisch unbedenkliche Salze, dadurch gekennzeichnet, dass man eine Verbindung der Formel (II)

$$R_1-X-R_2-S(O)_n-R_3-YH \quad (II)$$

in der
$R_1$, $R_2$, $R_3$, X, Y und n die oben angegebene Bedeutung haben,
entweder
a) mit einer Verbindung der allgemeinen Formel (III) oder (IIIa)

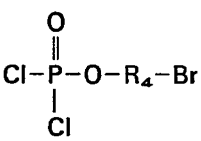 (III), 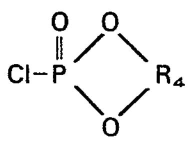 (IIIa),

in denen
$R_4$ die obengenannte Bedeutung hat, in Gegenwart eines säurebindenden Mittels umsetzt, das Reaktionsprodukt bei Verwendung einer Verbindung der Formel (III) selektiv hydrolysiert und das verbleibende Bromatom gegen eine gegebenenfalls alkylierte Ammoniumgruppe austauscht, bei Verwendung einer Verbindung der Formel (IIIa) direkt mit gegebenenfalls alkyliertem Ammoniak behandelt
oder
b) in eine Verbindung der allgemeinen Formel (IV) überführt

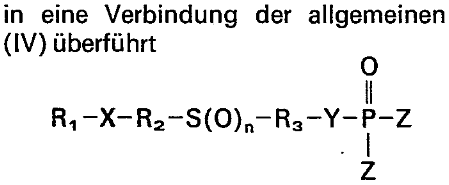 (IV)

in der
$R_1$, $R_2$, $R_3$, Y, X und n die oben angegebenen Bedeutungen haben und Z Hydroxy, Chlor oder Brom bedeutet, und diese mit einer Verbindung der allgemeinen Formel (V)

$$HO-R_4-\overset{\oplus}{N}(R_5)_3\ Hal^{\ominus} \quad (V)$$

in der
$R_4$ und $R_5$ die oben angegebenen Bedeutungen haben und $Hal^{\ominus}$ Chlorid, Bromid oder Jodid sein soll, in Gegenwart eines säurebindenden Mittels oder eines Aktivierungsreagenzes umsetzt,
oder
c) mit einer Verbindung der allgemeinen Formel (VI)

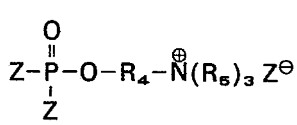 (VI)

in der
$R_4$, $R_5$ und Z die oben angegebenen Bedeutungen haben, und $Z^{\ominus}$ Chlorid oder Bromid sein soll, in Gegenwart eines säurebindenden Mittels umsetzt,
die erhaltenen Verbindungen gewünschtenfalls in das innere Salz überführt, gegebenenfalls zu den Sulfonen oder Sulfoxiden oxidiert, gegebenenfalls quaterniert und gewünschtenfalls Verbindungen der Formel (I) in pharmakologisch unbedenkliche Salze überführt.

6. Verfahren gemäss dem Anspruch 5, wobei eine Verbindung der Formel (II) mit Phosphorsäureoxyhalogenid in Gegenwart eines säurebindenden Mittels zu einer Verbindung der Formel (IV) umgesetzt wird.

7. Arzneimittel, enthaltend Verbindungen der Ansprüche 1 bis 4 und übliche Träger- und Hilfsstoffe.

8. Verbindung gemäss den Ansprüchen 1 bis 4 zur Verwendung bei der Bekämpfung von Krebs.

9. 2-(2-Propinyl)-3-hexadecylmercaptopropanol-(1)-phosphorsäuremonocholinester.

## Claims

1. Alkanol phosphoric acid monoammonium alkyl esters of the formula (I)

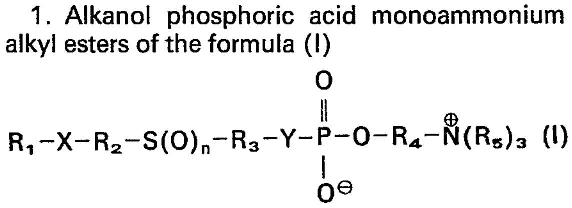 (I)

in which X signifies a valency bond, oxygen, sulphur, the sulphinyl or sulphonyl group, the –NHO–, –CONH– or –NHCONH– group, a $C_3$ to $C_8$ cycloalkylene or phenylene radical, Y oxygen or sulphur, $R_1$ hydrogen, a straight-chained or branched, saturated or unsaturated alkyl radical with 1 to 18 carbon atoms, which is possibly substituted one or more times by aryl, halogen, a lower alkoxy, alkylmercapto, alkoxycarbonyl, alkanesulphinyl or alkanesulphonyl group, $R_2$ a straight-chained or branched, saturated or unsaturated alkylene chain with 1 to 18 carbon atoms, which is possibly substituted one or more times by halogen, aryl, a lower alkoxy, alkoxycarbonyl, alkylmercapto, alkanesulphinyl, or alkanesulphonyl group, $R_3$ a straight-chained or branched, saturated or unsaturated alkylene chain with 2 to 8 carbon atoms, which can also be part of a cyclopentane, cyclohexane or cycloheptane ring, possibly substituted by a lower alkyl group, and is possibly substituted one or more times by hydroxyl, halogen, nitrile, a cycloalkyl, phenyl, alkoxycarbonyl, optionally alkylated carbamoyl, alkylmercapto, alkanesulphinyl, alkanesulphonyl, optionally acylated amino group or by alkoxy which, in turn, can be substituted by aryl, alkylmercapto, alkanesulphinyl, alkanesulphonyl, optionally acylated $NH_2$, alkoxycarbonyl, nitrile, hydroxyl, alkoxy or optionally alkylated carbamoyl, $R_4$ a straight-chained or branched alkylene chain with 2 to 4 carbon atoms, $R_5$ hydrogen or a lower alkyl

group and n the numbers 0, 1 or 2, with the proviso that the group $R_1-X-R_2$, for the case in which it represents an alkyl group (X = valency), has up to 20 C-atoms, as well as their pharmacologically acceptable salts.

2. Compounds of the formula (I) according to claim 1, in which $R_1$, $R_2$, $R_3$, Y and X have the given meaning and $R_4$ represents a $-CH_2-CH_2-$ chain, $R_5$ the methyl group and n the number 0.

3. Compounds of the formula (I) according to claim 1, in which $R_3$ has the given meaning, $R_4$ represents a $-CH_2-CH_2-$ chain, $R_5$ the methyl group, Y oxygen, n the number 0 and $R_1$ and $R_2$ together have 16 to 18 C-atoms and X represents a valency bond or oxygen.

4. Compounds of the formula (I) according to claim 3, in which $R_1$, $R_2$, $R_4$, $R_5$, Y, X and n have the given meaning and $R_3$ represents a $-CH_2-CH_2-CH_2-$ chain, the middle carbon atom of which can be substituted by hydroxyl, lower alkyl or a lower alkoxy group, whereby both groups can, in turn, be substituted by alkoxy.

5. Process for the preparation of alkanol phosphoric acid ammonium alkyl esters of the formula (I)

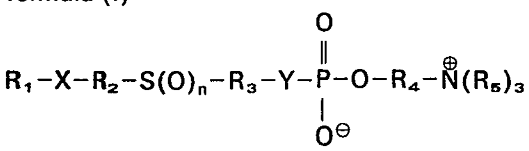 (I)

in which X signifies a valency bond, oxygen, sulphur, the sulphinyl or sulphonyl group, the $-NHCO-$, $-CONH-$ or $-NHCONH-$ group, a $C_3$ to $C_8$ cycloalkylene radical or phenylene radical, Y oxygen or sulphur, $R_1$ hydrogen, a straight-chained or branched, saturated or unsaturated alkyl radical with 1 to 18 carbon atoms, which is possibly substituted one or more times by aryl, halogen, a lower alkoxy, alkylmercapto, alkoxycarbonyl, alkanesulphinyl or alkanesulphonyl group, $R_2$ a straight-chained or branched, saturated or unsaturated alkylene chain with 1 to 18 carbon atoms, which is possibly substituted one or more times by halogen, aryl, a lower alkoxy, alkoxycarbonyl, alkylmercapto, alkanesulphinyl or alkanesulphonyl group, $R_3$ a straight-chained or branched, saturated or unsaturated alkylene chain with 2 to 8 carbon atoms, which can also be part of a cyclopentane, cyclohexane or cycloheptane ring, possibly substituted by a lower alkyl group, and is possibly substituted one or more times by hydroxyl, halogen, nitrile, a cycloalkyl, phenyl, alkoxycarbonyl, optionally alkylated carbamoyl, alkylmercapto, alkanesulphinyl, alkanesulphonyl, optionally acylated amino group or by alkoxy which, in turn, can be substituted by aryl, alkylmercapto, alkanesulphinyl, alkanesulphonyl, optionally acylated $NH_2$, alkoxycarbonyl, nitrile, hydroxyl, alkoxy or optionally alkylated carbamoyl, $R_4$ a straight-chained or branched alkylene chain with 2 to 4 carbon atoms, $R_5$ hydrogen or a lower alkyl group and n the numbers 0, 1 or 2, with the proviso that the group $R_1-X-R_2$, for the case in which it represents an alkyl group (X = valency), has up to 20 C-atoms, as well as of their pharmacologically acceptable salts, characterised in that one reacts a compound of the formula (II)

$$R_1-X-R_2-S(O)_n-R_3-YH \quad (II)$$

in which $R_1$, $R_2$, $R_3$, X, Y and n have the above-given meaning, either

a) with a compound of the general formula (III) or (IIIa)

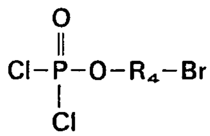 (III), 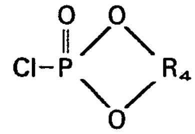 (IIIa),

in which $R_4$ has the above-mentioned meaning, in the presence of an acid-binding agent, selectively hydrolyses the reaction product in the case of the use of a compound of the formula (III) and replaces the remaining bromine atom by an optionally alkylated ammonium group, in the case of the use of a compound of the formula (IIIa) treats directly with optionally alkylated ammonia, or

b) converts into a compound of the general formula (IV)

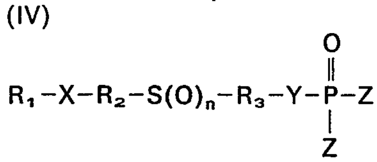 (IV)

in which $R_1$, $R_2$, $R_3$, Y, X and n have the above-given meaning and Z signifies hydroxyl, chlorine or bromine, and reacts this with a compound of the general formula (V)

$$HO-R_4-\overset{\oplus}{N}(R_5)_3\ Hal^{\ominus} \quad (V)$$

in which $R_4$ and $R_5$ have the above-given meanings and $Hal^{\ominus}$ is to be chloride, bromide or iodide, in the presence of an acid-binding agent or of an activating reagent, or

c) with a compound of the general formula (VI)

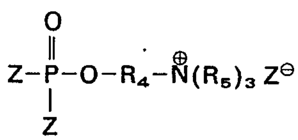 (VI)

in which $R_4$, $R_5$ and Z have the above-given meanings and $Z^{\ominus}$ is to be chloride or bromide, in the presence of an acid-binding agent, if desired converts the compounds obtained into the internal salt, optionally oxidises to the sulphones or sulphoxides, optionally quaternises and, if desired, converts compounds of the formula (I) into pharmacologically acceptable salts.

6. Process according to claim 5, wherein a compound of the formula (II) is reacted with phosphoric acid oxyhalide in the presence of an acid-binding agent to give a compound of the formula (IV).

7. Medicaments containing compounds of claims 1 to 4 and conventionnal carrier and adjuvant materials.

8. Compounds according to claims 1 to 4 for use in the combating of cancer.

9. 2-(2-Propynyl)-3-hexadecylmercaptopropanol-(1) phosphoric acid monocholine ester.

## Revendications

1. Esters monoammoniumalkyliques d'acide alcanolphosphoriques de formule (I):

$$R_1-X-R_2-S(O)_n-R_3-Y-\underset{\underset{O^{\ominus}}{|}}{\overset{\overset{O}{\|}}{P}}-O-R_4-\overset{\oplus}{N}(R_5)_3 \quad (I)$$

dans laquelle
X est un trait de valence, de l'oxygène, du soufre, le groupe sulfinyle ou sulfonyle, le groupe $-NHCO-$, $-CONH-$ ou $-NHCONH-$, un reste cycloalkylène $C_3$ à $C_8$ ou phénylène,
Y est de l'oxygène ou du soufre,
$R_1$ est de l'hydrogène, un reste alkyle à chaîne droite ou ramifiée, saturée ou insaturée ayant de 1 à 18 atomes de carbone, éventuellement substitué une ou plusieurs fois par de l'aryle, de l'halogène, un reste alcoxy inférieur, alkylmercapto, alcoxycarbonyle, alcanesulfinyle ou alcanesulfonyle,
$R_2$ est une chaîne alkylène droite ou ramifiée, saturée ou insaturée ayant de 1 à 18 atomes de carbone, éventuellement substituée une ou plusieurs fois par de l'halogène, de l'aryle, un groupe alcoxy inférieur, alcoxycarbonyle, alkylmercapto, alcanesulfinyle ou alcanesulfonyle,
$R_3$ est une chaîne alkylène droite ou ramifiée, saturée ou insaturée ayant de 2 à 8 atomes de carbone, pouvant également faire partie d'un des noyaux cyclopentane, cyclohexane et cycloheptane éventuellement substitués par un groupe alkyle inférieur et, substitué éventuellement une ou plusieurs fois par de l'hydroxyle, de l'halogène, du nitrile, un groupe cycloalkyle, phényle, alcoxycarbonyle, carbamoyle éventuellement alkylé, alkylmercapto, alcanesulfinyle, alcanesulfonyle, amino éventuellement acylé ou par de l'alcoxy pouvant à son tour éventuellement être substitué par de l'aryle, de l'alkylmercapto, de l'alcane sulfinyle, de l'alcane sulfonyle, du $NH_2$ éventuellement acylé, de l'alcoxycarbonyle, du nitrile, de l'hydroxyle, de l'alcoxy ou par du carbamoyle éventuellement alkylé,
$R_4$ est une chaîne alkylène droite ou ramifiée ayant de 2 à 4 atomes de carbone,
$R_5$ est de l'hydrogène ou un groupe alkyle inférieur, et
n est le nombre 0, 1 ou 2,
avec la restriction que le groupe $R_1-X-R_2$ possède, dans le cas où il représente un groupe alkyle (X est un trait de valence), jusqu'à 20 atomes de carbone, ainsi que leurs sels pharmacologiquement insoupçonnables.

2. Composés de formule (I) selon la revendication 1, dans laquelle $R_1$, $R_2$, $R_3$, Y et X ont la signification indiquée, $R_4$ est une chaîne $-CH_2-CH_2-$, $R_5$ est le groupe méthyle et n est le nombre 0.

3. Composés de formule (I) selon la revendication 1, dans laquelle $R_3$ a la signification indiquée, $R_4$ est une chaîne $-CH_2-CH_2-$, $R_5$ est le groupe méthyle, Y est de l'oxygène, n est le nombre 0, $R_1$ et $R_2$ possèdent ensemble de 16 à 18 atomes de carbone, X représente un trait de valence ou de l'oxygène.

4. Composé de formule (I) selon la revendication 3, dans laquelle $R_1$, $R_2$, $R_4$, $R_5$, X, Y et n ont la signification indiquée, $R_3$ est une chaîne $-CH_2-CH_2-CH_2-$ dont l'atome de carbone central peut être substitué par de l'hydroxyle, de l'alkyle inférieur ou un groupe alcoxy inférieur, ces deux groupes pouvant être substitués à leur tour par de l'alcoxy.

5. Procédé pour la préparation d'esters ammoniumalkyliques d'acide alcanolphosphoriques de formule (I):

$$R_1-X-R_2-S(O)_n-R_3-Y-\underset{\underset{O^{\ominus}}{|}}{\overset{\overset{O}{\|}}{P}}-O-R_4-\overset{\oplus}{N}(R_5)_3 \quad (I)$$

dans laquelle
X est un trait de valence, de l'oxygène, du soufre, le groupe sulfinyle ou sulfonyle, le groupe $-NHCO-$, $-CONH-$ ou $-NHCONH-$, un reste cycloalkylène $C_3$ à $C_8$ ou phénylène,
Y est de l'oxygène ou du soufre,
$R_1$ est de l'hydrogène, un reste alkyle à chaîne droite ou ramifiée, saturée ou insaturée ayant de 1 à 18 atomes de carbone, éventuellement substitué une ou plusieurs fois par de l'aryle, de l'halogène, un reste alcoxy inférieur, alkylmercapto, alcoxycarbonyle, alcanesulfinyle ou alcanesulfonyle,
$R_2$ est une chaîne alkylène droite ou ramifiée, saturée ou insaturée ayant de 1 à 18 atomes de carbone, éventuellement substituée une ou plusieurs fois par de l'halogène, de l'aryle, un groupe alcoxy inférieur, alcoxycarbonyle, alkylmercapto, alcanesulfinyle ou alcanesulfonyle,
$R_3$ est une chaîne alkylène droite ou ramifiée, saturée ou insaturée ayant de 2 à 8 atomes de carbone, pouvant également faire partie d'un des noyaux cyclopentane, cyclohexane et cycloheptane éventuellement substitués par un groupe alkyle inférieur et, substitué éventuellement une ou plusieurs fois par de l'hydroxyle, de l'halogène, du nitrile, un groupe cycloalkyle, phényle, alcoxycarbonyle, carbamoyle éventuellement alkylé, alkylmercapto, alcanesulfinyle, alcanesulfonyle, amino éventuellement acylé ou par de l'alcoxy pouvant à son tour éventuellement être substitué par de l'aryle, de l'alkylmercapto, de l'alcane sulfinyle, de l'alcane sulfonyle, du $NH_2$ éventuellement acylé, de l'alcoxycarbonyle, du nitrile, de l'hydroxyle, de l'alcoxy ou par du carbamoyle éventuellement alkylé,
$R_4$ est une chaîne alkylène droite ou ramifiée ayant de 2 à 4 atomes de carbone,
$R_5$ est de l'hydrogène ou un groupe alkyle inférieur, et
n est le nombre 0, 1 ou 2,
avec la restriction que le groupe $R_1-X-R_2$ possède dans le cas où il représente un groupe

alkyle (X est un trait de valence), jusqu'à 20 atomes de carbone, ainsi que de leurs sels pharmacologiquement insoupçonnables, caractérisé en ce qu'on soumet un composé de formule (II):

$$R_1-X-R_2-S(O)_n-R_3-YH \quad \text{(II)}$$

dans laquelle
$R_1$, $R_2$, $R_3$, X, Y et n ont la signification ci-dessus indiquée, soit
a) à une réaction avec un composé de formule générale (III) ou (IIIa)

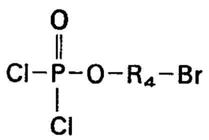 (III),

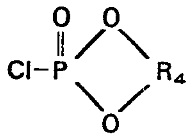 (IIIa),

dans lesquelles
$R_4$ a la signification ci-dessus indiquée, en présence d'un agent liant l'acide, après quoi on hydrolyse sélectivement le produit réactionnel dans le cas d'une réaction avec un composé de formule (III) et on échange l'atome de brome restant contre un groupe ammonium éventuellement alkylé et, dans le cas d'une réaction avec un composé de formule (IIIa), on traite le produit réactionnel immédiatement avec de l'ammoniac éventuellement alkylé, soit
b) à une réaction de transformation en un composé de formule générale (IV)

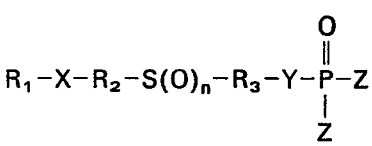 (IV)

dans laquelle $R_1$, $R_2$, $R_3$, Y, X et n ont la signification donnée ci-dessus et Z est l'hydroxyle, le chlore ou le brome, après quoi on fait réagir ce composé avec un composé de formule générale (V)

$$HO-R_4-\overset{\oplus}{N}(R_5)_3\ Hal^{\ominus} \quad \text{(V)}$$

dans laquelle $R_4$ et $R_5$ ont la signification donnée ci-dessus et hal$^{\ominus}$ doit être un chlorure, un bromure ou un iodure, en présence d'un agent liant l'acide ou d'un réactif d'activation, soit
c) à une réaction avec un composé de formule générale (VI)

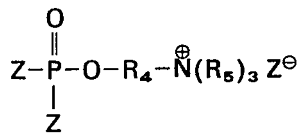 (VI)

dans laquelle
$R_4$, $R_5$ et Z ont la signification donnée ci-dessus et $Z^{\ominus}$ doit être un chlorure ou un bromure, en présence d'un agent liant l'acide,
et on transforme les composés obtenus si on le désire en leurs sels internes, on les transforme éventuellement par oxydation en leurs sulfones ou leurs sulfoxydes, on les quaternise éventuellement et on transforme éventuellement les composés de formule (I) en leurs sels pharmacologiquement insoupçonnables.

6. Procédé selon la revendication 5, caractérisé en ce qu'on transforme un composé de formule (II) avec un oxyhalogénure d'acide phosphorique en présence d'un agent liant l'acide en un composé de formule (IV).

7. Médicament contenant les composés définis dans l'une des revendications 1 à 4 et les substances de support et auxiliaires habituelles.

8. Composés selon l'une des revendications 1 à 4 pour le traitement des cancers.

9. Le monoester de choline avec l'acide 2-(2-propinyl)-3-hexadécylmercapto-propanol-(1)-phosphorique.